Europäisches Patentamt

European Patent Office

Office européen des brevets

(19)

(11) **EP 1 236 287 B1**

(12) **EUROPÄISCHE PATENTSCHRIFT**

(45) Veröffentlichungstag und Bekanntmachung des Hinweises auf die Patenterteilung:
**10.11.2004   Patentblatt 2004/46**

(21) Anmeldenummer: **00983181.9**

(22) Anmeldetag: **28.11.2000**

(51) Int Cl.$^7$: **H04B 1/707**

(86) Internationale Anmeldenummer:
**PCT/EP2000/011885**

(87) Internationale Veröffentlichungsnummer:
**WO 2001/043301 (14.06.2001 Gazette 2001/24)**

(54) **PAR- UND AUSSERBANDSTRAHLUNGS- REDUZIERUNG IN CODEMULTIPLEX-MODULATIONSSYSTEMEN**

PAR AND OUT OF BAND RADIATION REDUCTION IN CODE MULTIPLEX MODULATION SYSTEMS

REDUCTION DU RAPPORT VALEUR DE CRETE/VALEUR MOYENNE ET DU RAYONNEMENT HORS BANDE DANS DES SYSTEMES DE MODULATION MULTIPLEX PAR REPARTITION EN CODE

(84) Benannte Vertragsstaaten:
**DE**

(30) Priorität: **06.12.1999   DE 19958658**

(43) Veröffentlichungstag der Anmeldung:
**04.09.2002   Patentblatt 2002/36**

(73) Patentinhaber: **Fraunhofer-Gesellschaft zur Förderung der angewandten Forschung e.V. 80686 München (DE)**

(72) Erfinder: **BREILING, Marco 91054 Erlangen (DE)**

(74) Vertreter: **Schoppe, Fritz, Dipl.-Ing. Schoppe, Zimmermann, Stöckeler & Zinkler, Patentanwälte, Postfach 246 82043 Pullach bei München (DE)**

(56) Entgegenhaltungen:
**EP-A- 0 903 871**

- **VAN EETVELT P ET AL: "PEAK TO AVERAGE POWER REDUCTION FOR OFDM SCHERMES BY SELECTIVE SCRAMBLING" ELECTRONICS LETTERS,GB,IEE STEVENAGE, Bd. 32, Nr. 21, 10. Oktober 1996 (1996-10-10), Seiten 1963-1964, XP000683518 ISSN: 0013-5194**
- **PATENT ABSTRACTS OF JAPAN vol. 1998, no. 10, 31. August 1998 (1998-08-31) & JP 10 126309 A (HITACHI LTD), 15. Mai 1998 (1998-05-15)**

**Beschreibung**

Die vorliegende Erfindung bezieht sich allgemein auf die digitale Nachrichtenübertragung und insbesondere auf Konzepte zur Reduktion der Außerbandstrahlung von digitalen Nachrichtensendern für Sendesequenzen, die unter Verwendung eines Codemultiplexverfahrens generiert worden sind.

Allgemein umfaßt ein digitaler Nachrichtensender eine Quelle für Informationen, die beispielsweise ein MPEG-Audiocodierer für digitalen Rundfunk bzw. ein MPEG-Videocodierer für digitales Fernsehen sein könnte. Die Ausgangsdaten der Nachrichtenquelle, die in Form eines digitalen Bitstroms vorliegen, werden dann typischerweise unter Verwendung eines Kanal-Codierers codiert, um dem Bitstrom Redundanz hinzuzufügen, die dazu dient, im Empfänger Übertragungsfehler überwinden zu können. Daran anschließend wird der Kanal-codierte digitale Bitstrom in einen sogenannten "Interleaver" eingespeist, der die Reihenfolge der Daten untereinander nach einem dem Empfänger bekannten Algorithmus verändert, so daß sogenannte Burst-Fehler im Übertragungskanal nicht zu einem Verlust eines größeren zusammenhängenden Nachrichtenteils führen, sondern lediglich zu kleineren kurzen Verlusten, die über einen größeren Zeitraum verteilt sind. Der verschachtelte Bitstrom am Ausgang des Interleavers wird nun je nach Modulationsart unter Verwendung eines sogenannten Mappers in Modulationssymbole abgebildet.

Falls keine Modulation verwendet wird, und der digitale Bitstrom gewissermaßen ohne Modulation direkt gesendet wird, entfällt der Mapper sowie der daran anschließende Modulator.

Falls jedoch ein Modulationsverfahren verwendet wird, wie z. B. ein Mehrträgermodulationsverfahren, folgt auf den Mapper ein Modulator, der die Modulationssymbole auf die Nachrichtenträger aufmoduliert.

In jüngster Zeit wurde das OFDM-Verfahren für digitale Rundfunkanwendungen immer populärer. Bei diesem Verfahren wird eine Vielzahl von Unterträgern eingesetzt, auf die die durch den Mapper gebildeten Modulationssymbole moduliert werden. Das Modulationsverfahren ist hierbei eine inverse diskrete Fourier-Transformation, um, wie es bekannt ist, aus den vielen modulierten Trägern ein diskretes Zeitsignal zu erzeugen. Das diskrete üblicherweise komplexe Zeitsignal liegt in Form von komplexen Abtastwerten oder "Samples" vor, die dann in einen Interpolations-Tiefpaß eingespeist werden, um die sich periodisch wiederholenden Spektralanteile zu entfernen. Am Ausgang des Interpolations-Tiefpasses liegt dann ein Signal vor, das typischerweise mittels eines komplexen IQ-Modulators auf eine HF-Trägerfrequenz aufmoduliert wird, um ein HF-Signal zu erhalten, das schließlich in einen Sendeverstärker eingespeist wird, der das verstärkte Signal einer Antenne zuführt, die das Signal schließlich abstrahlt.

Bei Rundfunkanwendungen kommen typischerweise aufgrund der hohen Leistungsanforderungen am Ausgang des Verstärkers Röhrenverstärker, wie z. B. Klystrone oder Wanderfeldröhren, zur Anwendung. Falls geringere Leistungen genügen, wie z. B. im Mobilfunk, wo ein dichtes Netz von Sendern existiert, können auch Transistorverstärker eingesetzt werden.

Sowohl Transistorverstärker als auch Röhrenverstärker haben gemeinsam die Eigenschaft, daß sie nur in einem bestimmten Eingangsleistungsbereich linear sind und zu größer werdenden Eingangsleistungen eine abfallende Ausgangsleistungskurve haben, die schließlich, wenn der Verstärker vollständig in die Sättigung gerät, einen konstanten Verlauf hat. Anders ausgedrückt übt der Verstärker aufgrund seiner nichtlinearen Kennlinie zu höheren Eingangsleistungen hin nichtlineare Verzerrungen auf das Eingangssignal aus.

In Situationen, in denen für eine bestimmte Sendeanwendung ein bestimmtes Frequenzband beispielsweise durch eine staatliche Lizenzierungsbehörde zugeteilt worden ist, bestehen Vorschriften dahingehend, daß das Sendesignal für die spezielle lizenzierte Sendeanwendung lediglich Leistung in einem vorgeschriebenen Band haben darf, jedoch keine bzw. nur eine geringe Leistung außerhalb des zugewiesenen Bandes. Die Leistung außerhalb des zugewiesenen Bandes wird auch als Außerbandstrahlung bezeichnet.

Die nichtlineare Kennlinie des Verstärkers bei höheren Eingangsleistungen führt, wie es bereits erwähnt wurde, zu nichtlinearen Verzerrungen, derart, daß höhere Oberwellen durch den Verstärker erzeugt werden, die nicht mehr im zugewiesenen Band sondern außerhalb des Bands liegen und als Außerbandstrahlung gemessen werden können.

Es ist bekannt, daß diese nichtlinearen Verzerrungen ein relativ weißes Spektrum ergeben. Ist das Eingangssignal in den Verstärker noch bandbegrenzt, wovon beispielsweise bei der OFDM-Modulation auszugehen ist, so besitzt das Ausgangssignal dann Leistung außerhalb dieses Bandes.

Um dies zu vermeiden, d. h. um Vorschriften des Lizenzvergebers für die für Frequenzbänder festgelegten Toleranzschemata einzuhalten, d. h. wieviel Außerbandstrahlung außerhalb des zugeteilten Bands noch akzeptabel ist, sollte die Eingangsspannung in den Verstärker die maximale Eingangsspannung für eine verzerrungsfreie Verstärkung möglichst selten bzw. eigentlich nicht überschreiten. Anders ausgedrückt bedeutet dies, daß die tatsächlich vorhandene maximale Eingangsspannung so gering wie möglich sein sollte. Wenn die maximale Eingangsspannung immer kleiner als die maximale Spannung ist, bei der der Verstärker gerade noch linear arbeitet bzw. nur so wenig nichtlinear verstärkt, daß seine Außerbandstrahlung unterhalb des erlaubten Wertes ist, dann treten nie Verzerrungen auf, die zu einer höheren als erlaubten Außerbandstrahlung führen.

Nachteilig an dem eingangs beschriebenen OFDM-Verfahren ist das typischerweise auftretende große Spitzenleistung-zu-Durchschnittsleistung-Verhältnis, das auch als PAR (PAR = Peak To Average Power Ratio) bezeichnet wird. Anschaulich beschrieben können große Spitzen im Zeitsignal, d. h. im OFDM-Symbol nach der IDFT auftreten, wenn die Belegung der Träger gerade so ungünstig ist, daß sich beispielsweise alle 256 OFDM-Unterträger zu einem bestimmten Zeitpunkt konstruktiv überlagern. Hier wird eine große Signalspitze auftreten, die durchaus 10 bis 20 dB über der mittleren Signalleistung liegen kann. Um dennoch die zulässige Außerbandstrahlung einzuhalten, wird im Sendeverstärker typischerweise eine hohe Leistungsreserve eingehalten, die auch als "Power Back-Off" bezeichnet wird. Anders ausgedrückt wird der Verstärker an einem Arbeitspunkt betrieben, der derart niedrig angesetzt ist, daß auch eine hohe Leistungsspitze noch im linearen Bereich des Verstärkers liegt.

Diese Betriebsart eines Verstärkers ist eine außerordentlich ineffiziente Betriebsart, in der der Verstärker zwar viel Versorgungsleistung benötigt, jedoch nur eine relativ geringe Ausgangsleistung liefert. Die Forderung nach geringer Außerbandstrahlung in Verbindung mit hohen Spitzenwerten im zeitlichen Signal, die nicht nur bei einer OFDM-Modulation auftreten, sondern die auch beispielsweise bei einem Einträger-Verfahren durch einen Impulsformer auftreten, d. h. die allgemein bei einer Filterung auftreten können, führt dazu, daß teuere Verstärker benötigt werden, welche mit viel Leistungsreserve betrieben werden müssen und einen geringen Wirkungsgrad haben. Gerade für kleinere batteriebetriebene Anlagen ist jedoch der Wirkungsgrad ebenfalls ein Punkt, der insbesondere in Hinblick auf den Mobilfunk und dort verwendete Akkus mit begrenzter Speicherkapazität immer größere Beachtung findet.

Die WO 98/10567 A1 bezieht sich auf ein Verfahren zur Reduktion des Spitzenwertfaktors bei digitalen Übertragungsverfahren. Der grundsätzliche Gedanke besteht darin, bereits auf digitaler Seite Vorkehrungen zu treffen, daß im Zeitsignal keine so hohen Signalspitzen auftreten, so daß geringere Leistungsreserven für die Sendeverstärker ausreichen, ohne daß eine größer als zulässige Außerbandstrahlung auftritt. Das bekannte Konzept wird allgemein als Selected Mapping bezeichnet. Selected Mapping oder SLM bedeutet eigentlich lediglich, daß aus einer zu übertragenden Botschaft, d. h. einem Informationswort oder allgemeiner gesagt einem Vektor aus Datenbits auf wie auch immer geartete Art und Weise U unterschiedliche mögliche Signale erzeugt werden, die auch als Repräsentanten oder Kandidaten-Sendesequenzen bezeichnet werden können. Diese Signale werden jedoch nicht alle übertragen. Stattdessen wird ein spezielles Signal als Sendesignal ausgewählt. Insbesondere besitzt jedes Sendesignal einen Spitzenwert, der gemessen wird. Das Kandidaten-Sendesignal mit niedrigsten Spitzenwert wird schließlich als tatsächliches Sendesignal ausgewählt und übertragen.

Empfängerseitig besteht nun die Aufgabe herauszufinden, (a) welche Botschaft vorliegt, und (b) welcher der U möglichen Repräsentanten pro Botschaft übertragen wurde. Der Empfänger hat zwei Möglichkeiten, dies herauszufinden. Erstens mittels Seiteninformationen, die dem Empfänger vom Sender auf irgendeine Art und Weise mitgeteilt werden, und die sich darauf beziehen, welche der U Kandidaten-Sendesequenzen ausgewählt wurde. Nachteilig bei diesem Verfahren ist eine explizite Übertragung dieser Seiteninformationen, und insbesondere die Tatsache, daß diese Seiteninformationen besonders gut gegen Übertragungsfehler geschützt werden müssen. Dies ist im Falle einer digitalen Rundfunkübertragung, wo der Kanal auf beliebige Art und Weise gestört sein kann und daher schlecht vorhersagbar ist, nicht trivial.

Werden die Seiteninformationen falsch empfangen, dann kann auch das Empfangssignal nicht mehr fehlerfrei verarbeitet werden. Diese Tatsache führt dazu, daß diese Möglichkeit der Signalisierung mittels Seiteninformationen relativ unhandlich ist.

Eine andere Möglichkeit besteht darin, das Konzept ohne Übertragung von Seiteninformationen durchzuführen. Der Empfänger muß dann allein anhand des Empfangssignals herausfinden, welche Botschaft von M Botschaften, d. h. welches Modulationssymbol aus einer festgelegten Anzahl von Modulationssymbolen, vorliegt, und welche der U Kandidaten-Sendesequenzen pro Botschaft gesendet wurde. Statt M möglicher Sendesignale oder Modulationssymbole, aus denen der Empfänger das wahrscheinlichste herauszusuchen hat, müssen nun, wenn keine Seiteninformationen verwendet werden, M · U mögliche Sendesignale betrachtet werden. Dadurch kann sich die Fehlerwahrscheinlichkeit unter Umständen beträchtlich erhöhen. Außerdem ist eine geeignete Auswahl der U möglichen Kandidaten-Sendesequenzen pro Botschaft ein nicht triviales Problem. Bisher mangelte es an einer günstigen Lösung hierzu, so daß auch die Übertragung ohne explizite Seiteninformationen bisher noch nicht praxisreif ist.

Eine spezielle Ausformung von SLM, die ebenfalls in der WO 98/10567 A1 beschrieben ist, wird als PTS-Konzept (PTS = Partial Transmit Sequences) bezeichnet. Die U Kandidaten-Sendesequenzen werden folgendermaßen erhalten. Das Sendesignal liegt vor einer abschließenden linearen Filterung, beispielsweise einer Spektralformung bei Einträger-Verfahren oder einer inversen Fourier-Transformation bei OFDM, zeitdiskret vor, d. h. als Vektor von komplexwertigen Elementen. Der Vektor wird nun in Untermengen, also in Partial Transmit Sequences partitioniert. Für jede Untermenge können dann deren Elemente mit derselben komplexen Zahl mit Betrag 1 multipliziert werden. Diese Elemente werden in der komplexen Ebene alle um denselben Winkel gedreht. Nun erfolgt die abschließende lineare Filterung, durch die typischerweise erst die hohen Spitzenwerte erzeugt werden. Durch die freie Wahl der komplexen zahl, die zur Multiplikation verwendet wird, kann nun die Mehrzahl von Kandidaten-Sendesequenzen erzeugt werden. Auch hier bestehen die beiden Möglichkeiten, wie sie oben ausgeführt worden sind, nämlich ob mit oder ohne Seiteninformationen gearbeitet wird. Der Unterschied ist aber hier, daß ohne die Übertragung expliziter Seiteninformationen gearbeitet werden kann. Dies ist dadurch möglich, daß die zu übertragenden Informationen nicht absolut in den komplexwertigen Elementen des zeitdiskreten Sendesignals übertragen werden, sondern in Quotienten von aufeinanderfolgenden Elementen derselben Untermenge. Dieses Konzept wird allgemein als differentielle Vorcodierung bezeichnet. Da alle Elemente einer Untermenge mit derselben komplexen Zahl multipliziert worden sind, bleibt der Quotient von zwei aufeinanderfolgenden Elementen derselben Untermenge für jede der U Kandidaten-Sendesequenzen gleich. Der Empfänger muß dementsprechend nur diese Quotienten berechnen und erhält so die übertragenen Informationen zurück.

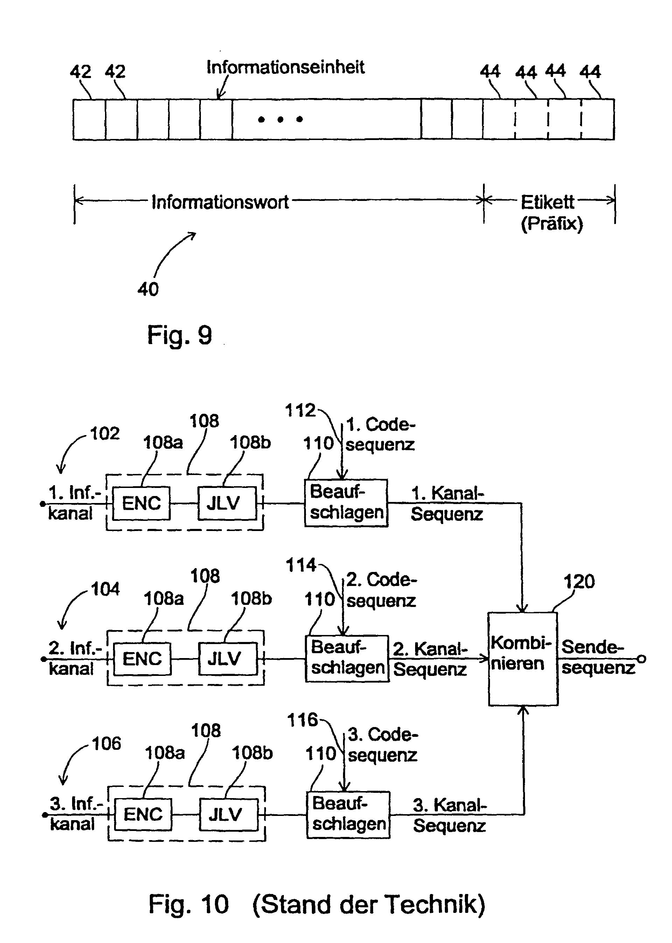

Fig. 10 zeigt ein prizipielles Blockschaltbild eines Abschnitts eines Senders für Sendesequenzen, die nach einem Codemultiplexverfahren erzeugt worden sind. Ein beispielhaftes Codemultiplex-Verfahren ist in der Technik als CDMA-Verfahren (CDMA = Code Division Multiple Access) bekannt. CDMA ist eine altbewährte Übertragungstechnik, bei der die zu übertragende, digital im Basisband vorliegende Information bei der Modulation spektral "gespreizt" wird, wobei diese Spreizung mit einem für jede einzelne Verbindung, d. h. für jeden einzelnen Teilnehmer, oder Informationskanal vorliegenden einzigartigen Code stattfindet. Daher heißt diese Technik auch "Spread Spectrum". Die Nutzinformation wird dazu für jeden Informationskanal mit einer festgelegten typischerweise höherfrequenten Bitfolge, welche auch als Codesequenz bezeichnet wird, beaufschlagt. Dadurch verbreitert sich die in Anspruch genommene Sendebandbreite bzw. die Energie dieses Signals wird auf eine größere Bandbreite verteilt.

Dieses Prozedere wird für mehrere Informationskanäle wiederholt, und die somit erhaltenen Kanalsequenzen werden dann addiert, um eine Sendesequenz zu bilden. Ist einem Empfänger der Code für einen Informationskanal bekannt, so kann er aus einer empfangenen Sendesequenz unter Verwendung eines Korrelators, der in Form eines "Matched Filters" ausgeführt sein kann, diesen Informationskanal wieder rekonstruieren. Die Ausführung des Matched Filters hängt dabei von der jeweiligen Codesequenz des Informationskanals ab.

Vorteilhaft an der CDMA-Technik ist generell eine gleichbleibend gute Qualität und eine höhere Kapazität bei geringerem Leistungsverbrauch bezüglich des Senders.

Aufgrund dieser Vorteile des CDMA-Verfahrens wird davon ausgegangen, daß das CDMA-Verfahren bei der nächsten Mobilkommunikationsgeneration, die als UMTS bezeichnet wird, und die die Nachfolgerin von GSM ist, benutzt wird. Insbesondere kommt das CDMA-Verfahren im sogenannten Downlink zum Einsatz. Downlink bedeutet hierbei, daß als Sender die Basisstationen betrachtet werden, nicht jedoch die Mobilteile. Die Funkstrecke von einer Basisstation zu einem Mobilteil wird also als Downlink bezeichnet, während die Funkstrecke von einem Mobilteil zu einer Basisstation als Uplink bezeichnet wird.

Fig. 10 zeigt im einzelnen eine CDMA-Stufe. Aus Übersichtlichkeitsgründen sind in Fig. 10 lediglich drei Informationskanäle 102, 104 und 106 gezeichnet. Die drei Informationskanäle können beispielsweise drei separate Kommunikationsverbindungen zwischen Mobilfunkteilnehmern sein, die alle über einen Funkkanal kommunizieren wollen. Informationen oder Botschaften in den jeweiligen Informationskanälen werden optional, wie es durch gestrichelte Umrandungen 108 veranschaulicht ist, einer üblichen Kanalcodierung und anschließenden Verschachtelung unterzogen. Dies ist in Fig. 10 durch einen mit ENC bezeichneten Codiererblock 108a dargestellt. Typischerweise wird der Codiererblock 108a eine Vorwärtsfehlerkorrektur, die auch als FEC (FEC = Forward Error Correction) bezeichnet wird, durchführen. Dem Codierer 108a ist ein Interleaver 108b nachgeschaltet, der mit ILV bezeichnet wird, und der die vom Codierer 108a ausgegebene Bitreihenfolge verwürfelt, um das ganze System unempfindlicher gegenüber sogenannten Burst-Fehlern zu machen.

Die auf irgendeine Art und Weise codierte und verschachtelte Information des ersten Informationskanals wird hierauf in eine Einrichtung 110 zum Beaufschlagen mit einer Codesequenz eingespeist. Jedem Informationskanal ist eine eigene Codesequenz zugeordnet. Das bedeutet, daß dem ersten Informationskanal 102 eine erste Codesequenz 112 zugeordnet, daß dem zweiten Informationskanal 104 eine zweite Codesequenz 114 zugeordnet ist, und daß dem dritten Informationskanal 106 eine dritte Codesequenz 116 zugeordnet ist. Die drei Codesequenzen müssen sich, damit die Informationskanäle wieder getrennt werden können, zumindest voneinander unterscheiden. Die beste Trennung und damit die besten Korrelationsspitzen am Ausgang eines Korrelators in einem Empfänger werden dann erreicht, wenn die drei Codesequenzen zueinander jeweils orthogonal sind, derart, daß bei einer Korrelation mit einer Codesequenz nur Korrelationsspitzen auftreten, wenn diese Codesequenz in irgendeiner Weise im untersuchten Signal vorhanden ist, daß jedoch für die anderen Codesequenzen, die auch im untersuchten Signal vorhanden sind, aufgrund der Orthogonalitätseigenschaften genau keine Korrelationsspitzen auftreten. Wie es bekannt ist, werden als Codesequenzen sogenannte Pseudo-Noise-Sequenzen eingesetzt, welche die Eigenschaft haben, daß sie ein relativ weißes Spektrum haben und andererseits ohne weiteres durch ein rückgekoppeltes Schieberegister erzeugt werden können, das abhängig von einem bestimmten Ausgangswert gestartet wird.

Am Ausgang der Einrichtungen zum Beaufschlagen liegt dann jeweils eine sogenannte Kanal-Sequenz vor, die allgemein gesagt die Information des Informationskanal beaufschlagt mit der Codesequenz umfaßt. Die Kanalsequenzen der einzelnen Teilkanäle werden dann in einer Einrichtung 120 kombiniert, wobei diese Kombination typischerweise mittels einer einfachen Addition stattfindet. Ausgangsseitig liegt dann eine Sendesequenz vor, die auf übliche Art und Weise nun hochgemischt, verstärkt und über eine Antenne abgestrahlt oder in einen drahtgebundenen Übertragungskanal eingespeist wird.

Im nachfolgenden wird auf die Funktion der Einrichtung 110 zum Beaufschlagen einer Information mit einer Codesequenz eingegangen. Beispielsweise liegt die Information am Ausgang des Interleavers 108b oder aber, wenn derselbe nicht vorhanden ist, als Information an sich in Form einer Folge von einzelnen Bits vor. Diese Bits können einen Wert von +1 beispielsweise für die Information "1" und einen Wert von -1 für die Information "0" haben. Ein Bit mit einem Wert von -1 führt dazu, daß am Ausgang der Einrichtung 110 zum Beaufschlagen die Codesequenz an sich steht, während ein Bit mit einem Wert von -1 dazu führt, daß am Ausgang der Einrichtung 110 zum Beaufschlagen die invertierte Codesequenz erscheint, d. h. die um 180 Grad phasenverschobene ursprüngliche Codesequenz. Wenn am Eingang der Einrichtung 110 zum Beaufschlagen eines Folge von Bits vorliegt, so wird am Ausgang der Einrichtung 110 zum Beaufschlagen eine Folge von positiven oder negativen Codesequenzen vorliegen, die zusammen die Kanalsequenz für diesen Informationskanal bilden. Die Einrichtung 110 zum Beaufschlagen führt somit dazu, daß, wenn die Codesequenz n Bit lang ist, und wenn eine Bitfolge am Ausgang des Interleavers m Bit lang ist, die Kanalsequenz am Ausgang der Einrichtung 110 zum Beaufschlagen eine Länge von $m \cdot n$ Bits hat.

Die Botschaften für die einzelnen Teilnehmer werden also optional codiert und interleavt, dann folgt die Einrichtung 110 zum Beaufschlagen, die auch allgemein als Mapper bezeichnet werden kann, da sie allgemein eine Abbildung der m Bits auf $n \cdot m$ Bits durchführt. Wie es in Fig. 10 dargestellt ist, unterscheiden sich die Codesequenzen für jeden Informationskanal, was für das CDMA-Verfahren wesentlich ist, um die einzelnen Informationskanäle wieder trennen zu können.

Die verschiedenen Kanalsequenzen der verschiedenen Informationskanäle werden, wie es ausgeführt worden ist, in der Einrichtung 120 zum Kombinieren aufaddiert. Diese Aufaddition der einzelnen Kanalsequenzen kann dazu führen, daß die Sendesequenz hohe Signalspitzen hat. Dieses Problem verschärft sich insbesondere dann, wenn nicht nur eine kleine Zahl von Informationskanälen verwendet wird, sondern wenn eine große Zahl von Informationskanälen aufaddiert werden muß, um die Sendesequenz zu erhalten. Im ungünstigsten Fall haben alle Kanalsequenzen zu einem bestimmten Zeitpunkt z. B. einen positiven Wert, was in einem hohen positiven Spitzenwert der Sendesequenz resultiert.

Für dieses Problem der hohen Signalspitzen in einer CDMA-Sendesequenz existierte bisher lediglich die Lösung, daß der Sendeverstärker, wie es bereits ausgeführt worden ist, mit einer großen Reserve betrieben wird, was zu den erwähnten Nachteilen führt.

Eine einfache Kombination des SLM-Konzepts bzw. des PTS-Konzepts als Untergruppe des SLM-Konzepts mit dem CDMA-Verfahren, d. h. daß statt einer Kanalsequenz eine Mehrzahl von Kanalsequenzen erzeugt wird, unter denen dann beispielsweise die mit dem geringsten Spitzenwert ausgewählt wird, führt zu keiner durchgreifenden Lösung des Problems. Dies liegt daran, daß die Kanalsequenzen für die einzelnen Informationskanäle unabhängig voneinander sind, derart, daß nicht davon ausgegangen werden kann, daß immer die günstigsten Kandidaten-Kanalsequenzen aus den einzelnen Teilkanälen zusammen eine Sendesequenz ergeben, die sich durch einen geringen Spitzenwert bzw. durch eine geringe Außerbandstrahlung auszeichnet, d. h. die optimal ist. Ein Beispiel der Anwendung dieses Konzeptes ist in "Peak to average power reduction for OFDM schemes by selective scrambling", P. van Eetwelt, G. Wade, M. Tomlinson, XP 683518, aufgeführt.

Die Aufgabe der vorliegenden Erfindung besteht darin, eine Lösung für das Problem der Außerbandstrahlung zu schaffen, die sich für Codemultiplex-Modulationsverfahren eignet.

Diese Aufgabe wird durch eine Vorrichtung zum Erzeugen einer Sendesequenz nach Patentanspruch 1 oder 2, durch ein Verfahren zum Erzeugen einer Sendesequenz nach Patentanspruch 14 oder 15, durch eine Vorrichtung zum Ermitteln von Informationen nach Patentanspruch 16 oder durch ein Verfahren zum Ermitteln von Informationen nach Patentanspruch 19 gelöst.

Der vorliegenden Erfindung liegt die Erkenntnis zugrunde, daß die hohen Spitzenwerte in einer Sendesequenz nicht dadurch minimiert werden können, daß für jeden Informationskanal die günstigste Kandidaten-Kanalsequenz ausgewählt wird, sondern daß eine Auswahl bzw. Optimierung der Sendesequenz auf der Basis von kombinierten Sequenzen durchgeführt werden muß. Dies bedeutet, daß zunächst eine Mehrzahl von Kandidaten-Kanalsequenzen für jeden Informationskanal unter Berücksichtigung einer diesem Informationskanal zugeordneten Codesequenz erzeugt wird, woraufhin jede Kandidaten-Kanalsequenz, als ob sie die einzige Kandidaten-Kanalsequenz dieses Kanals wäre, mit einer anderen Kandidaten-Kanalsequenz aus einem anderen Kanal usw. kombiniert wird, derart, daß eine Mehrzahl von kombinierten Sendesequenzen entsteht, die im Prinzip alle gesendet werden könnten, da sie alle sämtliche Informationen aus den Informationskanälen enthalten, von denen jedoch lediglich eine ein vorbestimmtes Kriterium am besten erfüllt. Das vorbestimmte Kriterium könnte beispielsweise der geringste Spitzenwert, die geringste Durchschnittsleistung, usw. sein. Erfindungsgemäß wird eine Auswahl also nicht aus einzelnen Kandidaten-Kanalsequenzen durchgeführt, sondern aus der Mehrzahl von kombinierten Sequenzen. Die Auswahl kann dadurch vonstatten gehen, daß die kombinierte Sendesequenz als Sendesequenz ausgewählt wird und direkt ausgegeben wird, oder daß, je nach Implementation und Randbedingungen, die einzelnen Kandidaten-Kanalsequenzen aus den verschiedenen Informationskanälen, die diese optimale kombinierte Sequenz ergeben, ausgewählt werden, um dann nach ihrer Auswahl aufaddiert zu werden, um die Sendesequenz zu bilden.

Durch die Kombination der Kandidaten-Kanalsequenzen und die daran anschließende Auswahl aus den kombinierten Sequenzen wird sichergestellt, daß die optimalste Sendesequenz herausgefunden wird, während dies im Falle des Auswählens der günstigsten Kandidaten-Kanalsequenzen für jeden Informationskanal getrennt nicht sichergestellt ist, da die einzelnen Informationskanäle unabhängig voneinander sind.

Es sei darauf hingewiesen, daß bereits unter Verwendung einer auch nur geringen Anzahl von Kandidaten-Kanalsequenzen in einem einzigen Informationskanal eine relativ hohe Diversität unter den verschiedenen kombinierten Sequenzen erreicht werden. Wenn beispielsweise der Fall betrachtet wird, daß acht Informationskanäle vorhanden sind, und daß nur in dem ersten und zweiten Informationskanal je zwei Kandidaten-Kanalsequenzen gebildet werden, so entsteht bereits eine Anzahl von vier verschiedenen kombinierten Sequenzen, aus denen die ausgewählt werden kann, die dem vorbestimmten Kriterium am ehesten entspricht.

Bevorzugte Ausführungsbeispiele der vorliegenden Erfindung werden nachfolgend bezugnehmend auf die beiliegenden Zeichnungen detailliert erläutert. Es zeigen:

Fig. 1　　ein Blockschaltbild einer erfindungsgemäßen Vorrichtung;

Fig. 2　　ein Blockschaltbild einer Einrichtung zum Erzeugen einer Mehrzahl von Kandidaten-Kanalsequenzen;

Fig. 3　　eine alternative Einrichtung zum Erzeugen einer Mehrzahl von Kandidaten-Kanalsequenzen;

Fig. 4　　ein Blockschaltbild einer erfindungsgemäßen Vorrichtung mit einer Einrichtung zum Erzeugen der Mehrzahl von Kandidaten-Kanalsequenzen nach Fig. 3 und einer alternativen Auswahlstufe;

Fig. 5　　ein rückgekoppeltes Schieberegister zum Ausführen eines invertierbaren rückgekoppelten Kombinationsalgorithmus;

Fig. 6　　ein Blockschaltbild einer erfindungsgemäßen Vorrichtung zum Ermitteln von Informationen eines Informationskanals;

Fig. 7　　ein detailliertes Blockschaltbild einer Einrichtung zum Verarbeiten von Fig. 6;

Fig. 8　　ein vorwärts gekoppeltes Schieberegister zur Implementation eines Algorithmus, der zum invertierbaren rückgekoppelten Kombinationsalgorithmus invers ist;

Fig. 9　　eine schematische Darstellung eines Informationsworts mit Etikett vor dem Verarbeiten durch einen invertierbaren rückgekoppelten Kombinationsalgorithmus;

Fig. 10　　ein Blockschaltbild eines bekannten Codemultiplex-Modulators.

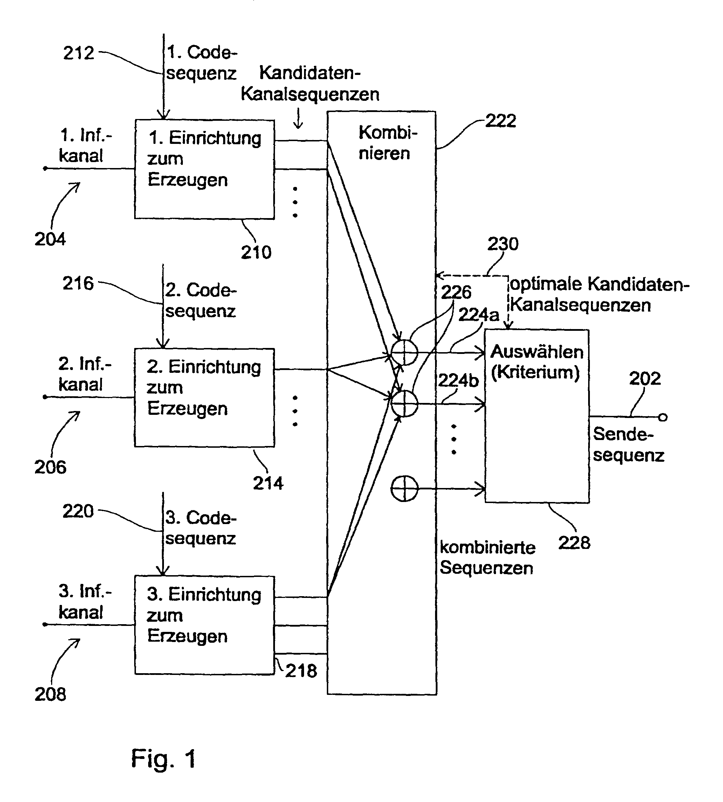

Fig. 1 zeigt eine erfindungsgemäße Vorrichtung zum Erzeugen einer Sendesequenz an einem Ausgang 202, wobei die Sendesequenz Informationen aus einer Mehrzahl von Informationskanälen aufweist. Lediglich schematisch sind in Fig. 1 drei Informationskanäle gezeichnet, nämlich ein erster Informationskanal 204, ein zweiter Informationskanal 206 und ein dritter Informationskanal 208. Jeder Informationskanal kann eine Einrichtung zum Erzeugen einer Mehrzahl von voneinander unterschiedlichen Kandidaten-Kanalsequenzen haben. Insbesondere hat der erste Informationskanal eine erste Einrichtung 210 zum Erzeugen einer Mehrzahl von voneinander unterschiedlichen Kandidaten-Kanalsequenzen aus einer Information des ersten Informationskanals 204 der Mehrzahl von Informationskanälen, wobei eine erste Codesequenz 212 verwendet wird, und wobei jede der erzeugten Kandidaten-Kanalsequenzen am Ausgang der Einrichtung 210 dieselbe Information, nämlich die Information des ersten Informationskanals, trägt, und wobei jede Kandidaten-Kanalsequenz am Ausgang der Einrichtung 210 unter Verwendung der ersten Codesequenz 212 erzeugt ist. Die Kandidaten-Kanalsequenzen am Ausgang der Einrichtung 210 unterscheiden sich jedoch darin, daß sie einem Selected-Mapping-Verfahren unterzogen worden sind, was dadurch zum Ausdruck kommt, daß sie unterschiedlich sind, jedoch dieselben Informationen tragen.

Die in Fig. 1 gezeigte erfindungsgemäße Vorrichtung umfaßt ferner eine zweite Einrichtung 214, die in ihrer allereinfachsten Form lediglich eine einzige Kandidaten-Kanalsequenz unter Verwendung einer zweiten Codesequenz 216 erzeugt, wobei die zweite Codesequenz dem zweiten Informationskanal 206 zugeordnet ist und sich von der ersten Codesequenz 212 unterscheidet, wie es bereits bezüglich Fig. 10 ausgeführt worden. Die erfindungsgemäße Vorrichtung, die in Fig. 1 beispielhaft gezeigt ist, umfaßt ferner eine dritte Einrichtung 218 zum Erzeugen zumindest einer Kandidaten-Kanalsequenz unter Verwendung einer dritten Codesequenz 220. Es sei darauf hingewiesen, daß ein erfindungsgemäßer Effekt bereits dann erreicht wird, wenn lediglich eine Einrichtung zum Erzeugen einer Mehrzahl von Kandidaten-Kanalsequenzen in einem Informationskanal vorgesehen ist und die anderen Informationskanäle gemäß dem Stand der Technik, wie er in Fig. 10 dargestellt worden ist, verarbeitet werden. Darüberhinaus müssen minimal zwei voneinander unterschiedliche Kandidaten-Kanalsequenzen für einen Informationskanal auf irgendeine Art und Weise, wie z. B. durch Selected Mapping, durch das PTS-Verfahren oder auch durch das nachfolgend beschriebene Verfahren unter Verwendung eines invertierbaren rückgekoppelten Kombinationsalgorithmus, erzeugt werden. Bereits wenn zwei voneinander unterschiedliche Kandidaten-Kanalsequenzen für einen einzigen Informationskanal vorhanden sind, kann bereits unter zwei Möglichkeiten ausgewählt werden, um die Sendesequenz am Ausgang 202 der erfindungsgemäßen Vorrichtung zu liefern.

Die in Fig. 1 gezeigte Vorrichtung umfaßt ferner eine Einrichtung 222 zum Kombinieren jeder Kandidaten-Kanalsequenz für den ersten Informationskanal mit der Kandidaten-Kanalsequenz für den zweiten Informationskanal, um eine Mehrzahl von kombinierten Sequenzen, wie z. B. die Sequenzen 224a und 224b, am Ausgang der Einrichtung 222 zu liefern. Wenn das erfindungsgemäße Konzept auf ein CDMA-Modulationsverfahren angewendet wird, wird die Einrichtung zum Kombinieren unter Verwendung von Addierern 226 arbeiten. Es sei jedoch darauf hingewiesen, daß das erfindungsgemäße Konzept des Kombinierens und des Auswählens unter den Kombinationsergebnissen und nicht unter den einzelnen Kandidaten für die einzelnen Informationskanäle nicht darauf begrenzt ist, daß das Kombinieren unter Verwendung einer Additionsoperation stattfindet. Alternative Kombinationsmöglichkeiten, wie z. B. eine Subtraktion, eine XOR-Operation etc. sind ebenfalls möglich.

Die erfindungsgemäße Vorrichtung umfaßt ferner eine Einrichtung 228 zum Auswählen der kombinierten Sequenz aus der Mehrzahl von kombinierten Sequenzen 224a, 224b als Sendesequenz, die ein vorbestimmtes Kriterium erfüllt. Alternativ ist die Einrichtung 228 zum Auswählen aus Implementationsgründen angeordnet, daß sie nicht unmittelbar eine beim Optimieren betrachtete kombinierte Sequenz auswählt und ausgibt, sondern die dieser optimalen kombinierten Sequenz zugrunde liegenden Kandidaten-Kanalsequenzen, die in Fig. 1 als optimale Kandidaten-Kanalsequenzen bezeichnet werden, über eine Steuerleitung 230 von der Einrichtung 222 zum Kombinieren abruft, und dann selbst aufaddiert, um die Sendesequenz am Ausgang 202 zu bilden. Es ist einsichtig, daß diese beiden genannten optionen, also mit Steuerleitung 230 oder ohne Steuerleitung 230 durch direkte Ausgabe der optimal kombinierten Sendesequenz zueinander gleichwertig sind.

Als Einrichtungen 210, 214, 218 zum Erzeugen einer Mehrzahl von Kandidaten-Kanalsequenzen können für die vorliegende Erfindung beliebige Einrichtungen verwendet werden, so lange die Kandidaten-Kanalsequenzen alle voneinander unterschiedlich sind, aber dieselbe Information tragen, und so lange sämtliche Kandidaten-Kanalsequenzen aus einem Informationskanal mit der diesem Informationskanal zugeordneten Codesequenzen beaufschlagt sind. Dies bedeutet, daß beispielsweise das eingangs beschriebene SLM-Konzept oder aber auch das eingangs beschriebene PTS-Konzept eingesetzt werden kann. Beim SLM-Konzept kann es allgemein erforderlich sein, Seiteninformationen zu übertragen, um anzuzeigen, welche Kandidaten-Kanalsequenzen letztendlich zur Sendesequenz geführt haben. Dies bedeutet, daß, wenn beispielsweise an drei Informationskanäle gedacht wird, wie es in Fig. 1 gezeigt ist, in der Sendesequenz, die durch die Einrichtung 228 ausgegeben wird, Seiteninformationen bezüglich aller drei Einrichtungen zum Erzeugen übertragen werden müssen, wenn für alle z. B. drei Kanäle unterschiedliche Kandidaten-Kanalsequenzen erzeugt worden sind.

Beim PTS-Konzept ist es dagegen nicht unbedingt notwendig, Seiteninformationen zu übertragen. Nachteilig ist jedoch an diesem Konzept, daß es nur für den Fall der differentiellen Vorcodierung praktikabel ist.

Eine weitere Möglichkeit, welche aufgrund ihrer Praktikabilität und flexiblen Einsetzbarkeit bevorzugt wird, besteht darin, unter Verwendung eines invertierbaren rückgekoppelten Kombinationsalgorithmus und unter Verwendung eines Etiketts, das einem durch den Kombinationsalgorithmus zu verarbeitenden Informationswort hinzugefügt wird, und einer anschließenden Beaufschlagung mit der ersten Codesequenz die einzelnen Kandidaten-Kanalsequenzen zu erzeugen.

Allgemein gesagt wird zur Erzeugung der Kandidaten-Kanalsequenzen ein invertierbarer rückgekoppelter Kombinationsalgorithmus eingesetzt, der jedoch nicht nur das Informationswort verarbeitet, aus dem eine Mehrzahl von Kandidaten-Kanalsequenzen erzeugt wird, die alle die gleiche Information wie das zugrunde liegende Informationswort tragen, sondern daß zusätzlich zusammen mit dem Informationswort ein Etikett ebenfalls durch den rückgekoppelten Kombinationsalgorithmus verarbeitet wird, wobei die einzelnen Kandidaten-Kanalsequenzen durch das bei der Erzeugung derselben verwendete Etikett eindeutig identifiziert sind. Rückgekoppelte Kombinationsalgorithmen haben die Eigenschaft, daß sie abhängig von verschiedenen Anfangszuständen im Rückkopplungszweig des Kombinationsalgorithmus unterschiedliche Ausgangswerte liefern.

Anders ausgedrückt werden komplett unterschiedliche Ausgangsvektoren bei gleichen Eingangswerten durch denselben Kombinationsalgorithmus erhalten, wobei die unterschiedlichen Ausgangsvektoren allein dadurch erzeugt werden, daß der Kombinationsalgorithmus mit Rückkopplung jeweils unterschiedliche Zustände aufgrund der Etiketten einnimmt. Stehen die Etiketten als Präfix am Anfang des Informationswort, so wird das Informationswort ausgehend von einem durch das Etikett bestimmten Startzustand des Kombinationsalgorithmus verarbeitet. Steht das Etikett irgendwo in dem Informationswort, so werden sich die Kandidaten-Kanalsequenzen bis zum Etikett nicht unterscheiden. Sobald das unterschiedliche Etikett in den Kombinationsalgorithmus läuft, findet gewissermaßen eine "Verzweigung" im Kombinationsalgorithmus statt, durch die dann die unterschiedlichen Kandidaten-Sendesequenzen entstehen. Wenn berücksichtigt wird, daß meistens ein Interleaver eingesetzt wird, der ohnehin ein Verwürfelung durchführt, so wird deutlich, daß es letztendlich unerheblich ist, ob die Kandidaten-Kanalsequenzen vor dem Interleaver in einem Anfangsabschnitt identisch sind und erst in einem Endabschnitt unterschiedlich sind.

Das Etikett wird dem Informationswort selbst hinzugefügt, so daß sowohl das Informationswort als auch das Etikett durch den rückgekoppelten Kombinationsalgorithmus verarbeitet werden, derart, daß das Etikett in jeder Kandidaten-Kanalsequenz gewissermaßen implizit enthalten ist.

In anderen Worten ausgedrückt werden die Etiketten somit verwendet, um den invertierbaren rückgekoppelten Kombinationsalgorithmus in einen Zustand zu treiben, wobei die Anzahl der Zustände, in die der rückgekoppelte Kombinationsalgorithmus und somit das Gedächtnis des Kombinationsalgorithmus getrieben werden kann, von den Eigenschaften des Rückkopplungszweigs abhängt. Derart, daß jede Kandidaten-Kanalsequenz ein anderes Etikett enthält, wird jede Kandidaten-Kanalsequenz gewissermaßen ausgehend von einem anderen Zustand aus durch den rückgekoppelten Kombinationsalgorithmus verarbeitet. Das Etikett in der Kandidaten-Kanalsequenz ist jedoch nicht mehr explizit ersichtlich. Es kommt erst wieder zum Vorschein, wenn die entsprechende Kandidaten-Kanalsequenz im Empfänger einer Verarbeitung durch einen Algorithmus unterzogen worden ist, der zum Algorithmus im Empfänger invers ist und somit eine Vorwärtskopplungs-Eigenschaft hat.

Nach der Verarbeitung durch den invertierten rückgekoppelten Kombinationsalgorithmus im Empfänger wird das Etikett, obwohl es hier explizit vorliegt, nicht mehr benötigt, da es seine "Schuldigkeit" gewissermaßen schon getan hat, indem es den vorwärtsgekoppelten Kombinationsalgorithmus inversen Algorithmus in seinen entsprechenden Anfangszustand getrieben hat, der der vorliegenden empfangenen Sendesequenz zugrunde liegt.

Ein Vorteil dieses Konzepts zur Erzeugung der Kandidaten-Kanalsequenzen besteht darin, daß keine explizite Übertragung der Seiteninformationen nötig ist. Das Etikett wird zwar in der Kandidaten-Kanalsequenz implizit übertragen, muß jedoch nicht besonders geschützt werden. Zudem sei angemerkt, daß üblicherweise eine Kanalcodierung zum Hinzufügen einer Redundanz im Sender sowie eine Interleaving-Operation auf das Informationswort ausgeübt wird, so daß auch das Etikett durch dieselben Maßnahmen wie das Informationswort selbst ohne zusätzlichen Aufwand automatisch geschützt wird.

Die Informationen aus einem Informationskanal werden dabei vorzugsweise in bestimmte Blöcke oder Informationsworte aufgeteilt, wobei dann einem Block eben ein Etikett zugeordnet wird. Je höher die Anzahl der Informationseinheiten im Vergleich zur Anzahl der Einheiten eines Etiketts ist, um so geringer ist die Redundanz, die hinzugefügt wird.

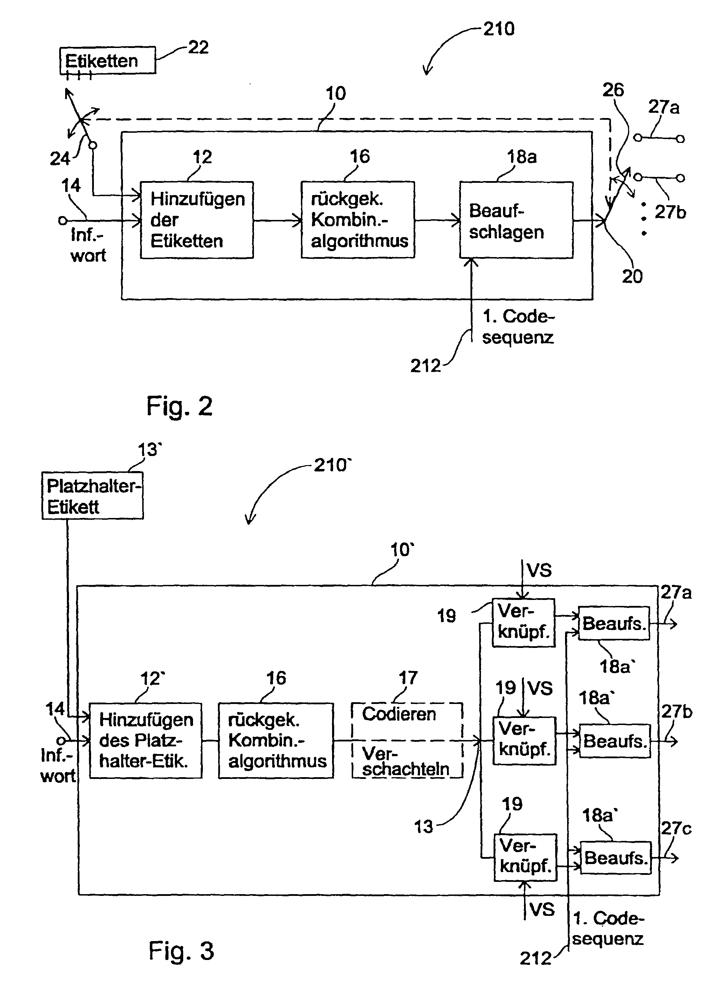

Fig. 2 zeigt beispielhaft die erste Einrichtung zum Erzeugen einer Mehrzahl von Kandidaten-Kanalsequenzen an Ausgängen 27a, 27b unter Verwendung der ersten Codesequenz 212. Informationen des ersten Informationskanals werden in ein Informationswort mit einer bestimmten Anzahl von Informationseinheiten zusammengefaßt, das an einem Eingang 14 anliegt.

Fig. 2 zeigt eine Einrichtung 210 zum Erzeugen einer Mehrzahl von Kandidaten-Kanalsequenzen aus einem Informationswort, das eine Mehrzahl von Informationseinheiten aufweist.

Die Einrichtung 210 umfaßt zunächst eine Einrichtung 12 zum Hinzufügen eines Etiketts zu einem Informationswort, das über einen Eingang 14 geliefert wird. Das Informationswort samt Etikett wird dann in eine Einrichtung 16 zum Verarbeiten des Informationsworts samt den hinzugefügten Etiketten durch einen invertierbaren rückgekoppelten Kombinationsalgorithmus eingespeist, um ein kombiniertes Informationswort am Ausgang der Einrichtung 16 zu erhalten, in dem die Informationseinheiten miteinander und/oder mit dem eingefügten Etikett kombiniert sind, derart, daß das kombinierte Informationswort durch das Etikett eindeutig identifiziert ist. Ein derart erzeugtes kombiniertes Informationswort wird dann in eine Einrichtung 18 zum Beaufschlagen des kombinierten Informationsworts mit der ersten Codesequenz 212 eingespeist, wobei die Einrichtung 18 zum Beaufschlagen derart angeordnet ist, daß eine Kandidaten-Kanalsequenz aus dem kombinierten Informationswort erzeugt wird. Eine solche Kandidaten-Kanalsequenz liegt an einem Ausgang 20 der Einrichtung 210 zum Bilden einer Mehrzahl von Kandidaten-Kanalsequenzen an. Die Einrichtung 210 zum Bilden der Mehrzahl von Kandidaten-Kanalsequenzen ist ferner derart angeordnet, um nach Fertigstellung einer Kandidaten-Kanalsequenz ein neues Etikett von einem Etikettenspeicher 22 mittels eines Etiketten-Schalters 24 zu holen. Gleichzeitig mit dem Etiketten-Schalter 24 wird ein ausgangsseitiger Kandidaten-Kanalsequenzenschalter 26 betätigt, um eine neue Kandidaten-Kanalsequenz an einem Ausgang 27a, 27b, ..., zu liefern.

Hat die Einrichtung 228 zum Auswählen sämtliche kombinierten Sequenzen erhalten, so beginnt der Auswahlschritt. Die einzelnen kombinierten Sequenzen werden bezüglich ihrer Signaleigenschaften untersucht, wonach eine kombinierte Sendesequenz als Sendesequenz ausgewählt wird, die ein vorbestimmtes Kriterium erfüllt.

Für das vorbestimmte Kriterium existieren verschiedene Möglichkeiten, die auch in Kombination angewendet werden können. Es sei in Erinnerung gerufen, daß das grundsätzliche Ziel des erfindungsgemäßen Konzepts darin besteht, auf praktikable und robuste Art und Weise die Leistungs-Reserve im Sendeverstärker zu verringern, ohne daß die Außerbandstrahlung über eine Toleranzgrenze steigt. Die Außerbandstrahlung steigt jedoch über eine Toleranzgrenze, wenn der zum Einsatz kommende HF-Sendeverstärker in seinen nichtlinearen Bereich aufgrund eines zu großen Eingangssignals, d. h. aufgrund eines zu großen zeitlichen Werts, gebracht wird.

Das genaueste Kriterium besteht darin, für jede kombinierte Sequenz die durch sie erzeugte Außerbandstrahlung unter Kenntnis der Verstärker-Kennlinie zu berechnen und dann die kombinierte Sequenz als Sendesequenz am Ausgang 34 der Einrichtung 30 zu nehmen, die die geringste Außerbandstrahlung verursacht. In diesem Fall ist das vorbestimmte Kriterium somit die geringste Außerbandstrahlung.

Dieses verfahren ist jedoch relativ aufwendig. Einfacher, aber ungenauer ist ein Verfahren, bei dem als Kriterium der kleinste Spitzenwert verwendet wird. Hierbei wird jede kombinierte Sequenz in der Einrichtung 222 Abtastwert für Abtastwert untersucht, um die kombinierte Sequenz herauszufinden, die den kleinsten Spitzenwert hat, d. h. wenn komplexe zeitliche Abtastwerte vorliegen, die den kleinsten absoluten Betrag der komplexen Abtastwerte hat.

Ein weiteres Verfahren zum Untersuchen und Auswählen, das bezüglich des Aufwands zwischen den beiden vorgenannten Verfahren liegen wird, besteht darin, die Durchschnittsleistung der einzelnen kombinierten Sequenzen zu ermitteln und die Sequenz mit der kleinsten Durchschnittsleistung als Sendesequenz auszuwählen. Das letztere Verfahren berücksichtigt den Fall, bei dem allein aufgrund einer Entscheidung nach dem größten Spitzenwert eine ansonsten günstige Kandidaten-Sendesequenz beispielsweise nur aufgrund eines einzigen hohen Spitzenwerts verworfen werden würde, während stattdessen eine kombinierte Sequenz als Sendesequenz ausgewählt werden würde, die zwar keinen so hohen Spitzenwert hat, aber aufgrund anderer relativ hoher Spitzenwerte dennoch einen beträchtlichen Anteil an Außerbandstrahlung erzeugt.

Bei dem in Fig. 2 gezeigten Konzept wird eine serielle Verarbeitung vorgenommen. Anders ausgedrückt existieren die Einrichtungen 12, 16 und 18a lediglich ein einziges Mal, wobei dieselben seriell mit unterschiedlichen Etiketten und dem gleichen Informationswort bedient werden, um die einzelnen Kandidaten-Sendesequenzen nacheinander zu berechnen. Alternativ können die Einrichtungen 12, 16, 18a vervielfacht werden, um eine parallele Berechnung der Kandidaten-Sendesequenzen zu erhalten, derart, daß in jeden parallelen Zweig ein anderes Etikett eingegeben wird. Auch gemischte Seriell/Parallel-Lösungen sind je nach Wunsch möglich.

Fig. 3 zeigt eine zu Fig. 2 äquivalente Implementation einer Einrichtung 210' zum Erzeugen einer Mehrzahl von Kandidaten-Kanalsequenzen an den Ausgängen 27a, 27b und 27c. Die Einrichtung 210 umfaßt ebenfalls eine Einrichtung 10' zum Bilden der Mehrzahl von Kandidaten-Sendesequenzen. Die Einrichtung 10' zum Bilden der Mehrzahl von Kandidaten-Sendesequenzen hat einen Eingang 14, an dem das zu verarbeitende Informationswort einzuspeisen ist, aus dem die Mehrzahl von Kandidaten-Kanalsequenzen an den Ausgängen 27a bis 27b erzeugt werden sollen.

Im Gegensatz zu dem in Fig. 2 gezeigten ersten Ausführungsbeispiel findet nun jedoch die Verbindung des Informationsworts mit dem Etikett gewissermaßen zweistufig statt, derart, daß durch eine Einrichtung 12' zum Hinzufügen eines Platzhalter-Etiketts lediglich ein Platzhalteretikett von einem Platzhalter-Etikettenspeicher 13' geliefert wird. Das Informationswort samt Platzhalteretikett wird dann in einer Einrichtung 16 zum Durchführen eines invertierbaren rückgekoppelten Kombinationsalgorithmus wie im Fall von Fig. 2 verarbeitet, um ein kombiniertes Informationswort zu erhalten, in dem die Informationseinheiten des Informationsworts miteinander und/oder mit dem eingefügten Platzhalteretikett kombiniert sind. Lediglich optional ist der Einrichtung 16 eine Einrichtung zum Kanal-Codieren und/oder zum Interleaven, d. h. Verschachteln, die allgemein mit dem Bezugszeichen 17 bezeichnet ist, nachgeschaltet. Ist die Einrichtung 17, die grundsätzlich optional ist, nicht vorhanden, so wird das kombinierte Informationswort in eine Anzahl von Verknüpfungseinrichtungen 19 eingespeist. Ist dagegen die Einrichtung 17 vorhanden, so wird nicht das kombinierte Informationswort sondern ein von dem kombinierten Informationswort abgeleitetes Wort in die Verknüpfungseinrichtungen 19 eingespeist, wobei die Ableitungsvorschrift den Verarbeitungsvorschriften des Blocks 17 entspricht.

In den Einrichtungen 19 zum Verknüpfen wird das kombinierte Informationswort, das lediglich - implizit - ein Platzhalteretikett enthält, mit unterschiedlichen Verknüpfungssequenzen verknüpft, um eine verknüpftes Informationswort zu erhalten, das durch das jeweilige Etikett eindeutig identifiziert ist. Die einzelnen Verknüpfungssequenzen (VS) werden derart gebildet, daß ein Etikett, wie es in der Einrichtung 22 von Fig. 1 vorliegt, genommen wird und derselben Verarbeitung wie das Informationswort am Eingang 14 von Fig. 2 unterzogen wird, derart, daß die Verknüpfungssequenz das verarbeitete Etikett ist. Durch die Verknüpfung mit dem jeweiligen verarbeiteten Etikett z. B. mittels einer bitweisen XOR-Operation werden somit die tatsächlichen Informationen des Etiketts anstelle des Platzhalter-Etiketts eingetragen, so daß sich am Ausgang der Verknüpfungseinrichtungen 19 die unterschiedlichen Kandidaten-Sendesequenzen ergeben. Diese werden schließlich in jeweilige optional von Zweig zu Zweig identische Beaufschlagungseinrichtungen 18'a eingespeist, um wieder mit der ersten Codesequenz 212 beaufschlagte Kandidaten-Kanalsequenzen zu erhalten.

Das in Fig. 3 dargestellte Konzept hat den Vorteil, daß während des tatsächlichen Betriebs die Einrichtungen 12, 16 und optional 17 lediglich einmal durchlaufen werden müssen, um das kombinierte Informationswort oder das von dem kombinierten Informationswort abgeleitete Wort zu erzeugen, das dann an einem Verteilerpunkt 13 auf die unterschiedlichen Verknüpfungseinrichtungen verteilt wird. Bei dem in Fig. 2 gezeigten zweiten Ausführungsbeispiel der vorliegenden Erfindung wird eigentlich wie beim ersten Ausführungsbeispiel auch das Etikett der Verarbeitung durch die Einrichtungen 12, 16 und optional 17 unterzogen, jedoch muß dies nicht während des tatsächlichen Sendens geschehen, sondern kann gewissermaßen "Off-line" durchgeführt werden. Vorteilhafterweise können somit die Verknüpfungs-Sequenzen außerhalb des tatsächlichen Betriebs berechnet werden und beispielsweise in einem ROM-Speicher abgespeichert werden, so daß die einzelnen Verknüpfungssequenzen, deren Anzahl der Anzahl der Etiketten und somit der Anzahl der unterschiedlichen Kandidaten-Sendesequenzen entspricht, während des Betriebs des digitalen Senders lediglich abgerufen werden müssen. Damit ist ein schneller Betrieb möglich.

Das in Fig. 3 gezeigte Konzept ermöglicht ebenfalls wieder eine rein serielle, eine rein parallele oder eine gemischte Seriell/Parallel-Verarbeitung, um die Mehrzahl von Kandidaten-Kanalsequenzen zu berechnen. Wird eine rein serielle Verarbeitung verwendet, so sind nur eine einzige Einrichtung 19 und eine einzige Einrichtung 18'a vorhanden, wobei immer nach Berechnen einer Kandidatensequenz eine neue Verknüpfungs-Sequenz in die einzige Einrichtung 19 eingespeist wird, um so nacheinander die einzelnen Kandidaten-Kanalsequenzen zu berechnen. Je nach Funktionalität wird ein Kompromiß darin bestehen, ob diese Operationen aufwendig sind und somit besser seriell ausgeführt werden sollten oder aber nicht aufwendig sind und parallel implementiert werden können, wodurch für jeden Anwendungsfall immer ein optimaler Kompromiß gefunden werden kann, der sich letztendlich, wenn an die Integration der gesamten in Fig. 2 und Fig. 3 gezeigten Funktionalität auf einem Anwendungsspezifischen integrierten Schaltkreis gedacht wird, in einem Kompromiß zwischen Chipfläche, Leistungsverbrauch, Größe, Kosten, usw. erschöpfen wird.

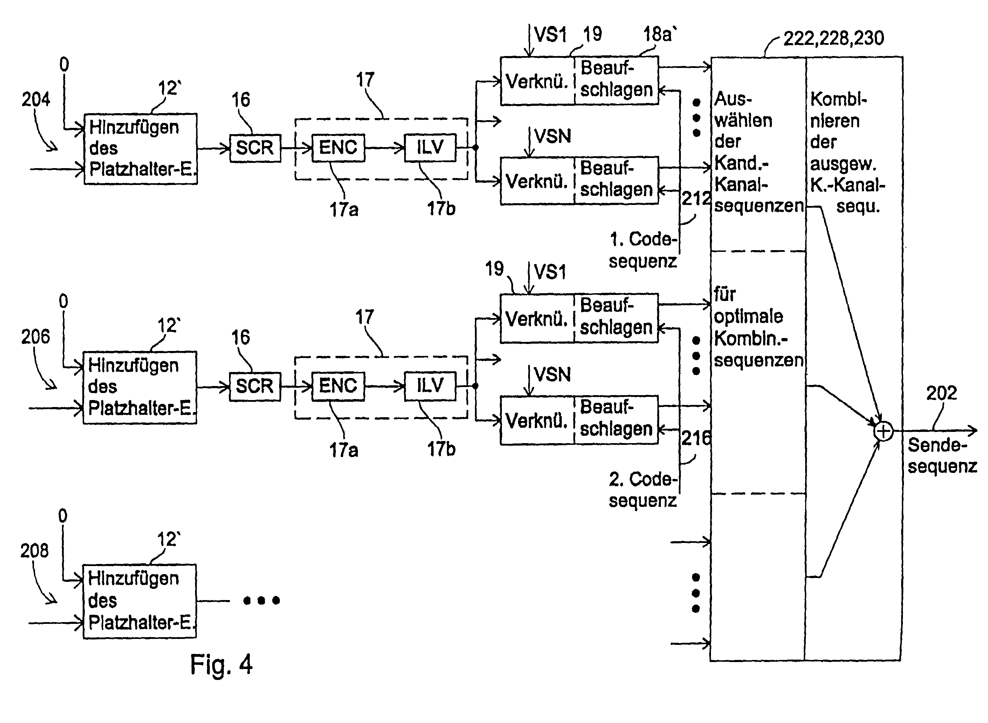

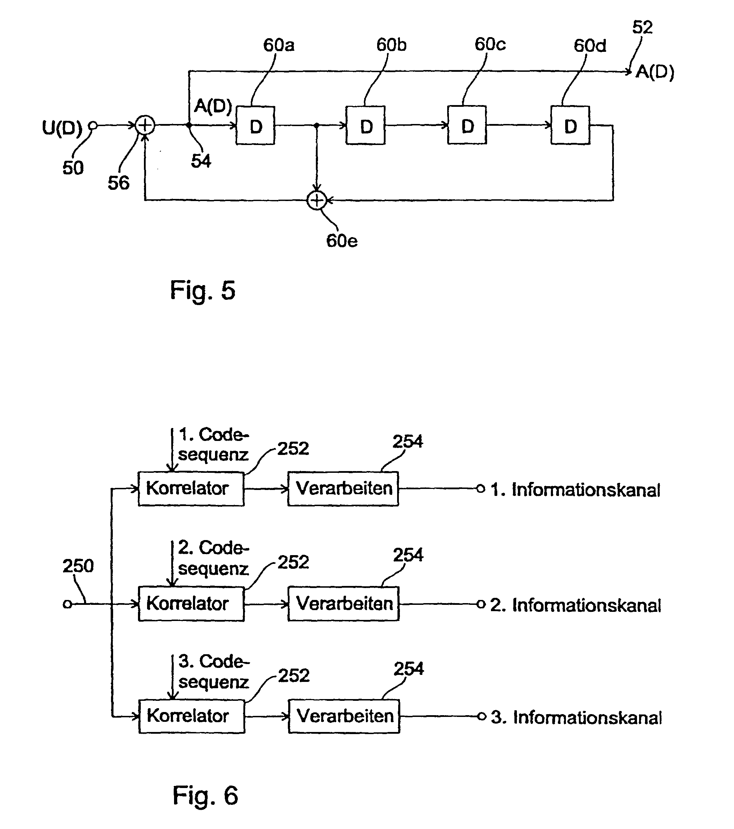

Im nachfolgenden wird auf Fig. 4 eingegangen, welche eine detailliertere Ansicht des in Fig. 1 gezeigten Codemultiplex-Modulatorkonzepts zeigt. Insbesondere werden als erste, zweite und dritte Einrichtung zum Erzeugen einer Mehrzahl von Kandidaten-Kanalsequenzen für den ersten, den zweiten und den dritten Informationskanal Einrichtungen eingesetzt, die gemäß dem in Fig. 3 gezeigten Alternativkonzept für den rückgekoppelten invertierbaren Kombinationsalgorithmus samt Platzhalter-Etikett ausgestaltet sind. Im einzelnen sind im vergleich zu Fig. 3 die Blöcke Codieren 17a (ENC) und Verschachteln 17b (ILV) im gestrichelt umrandeten Block 17 einzeln in der üblicherweise verwendeten Reihenfolge dargestellt. Ferner wird die Einrichtung 16 zum Durchführen des invertierbaren rückgekoppelten Kombinationsalgorithmus hier auch als Scrambler 16 bezeichnet, um auf die Implementationsform unter Verwendung eines rückgekoppelten binären Schieberegisters hinzuweisen, auf die bezugnehmend auf Fig. 5 detailliert eingegangen wird.

In Fig. 4 ist ferner ein Gesamtblock am Ausgang der Einrichtungen 18'a zum Beaufschlagen mit den den jeweiligen Informationskanälen zugeordneten Codesequenzen gezeigt. Dieser Gesamtblock ist mit dem Bezugszeichen 222, 228 und 230 bezeichnet, um darauf hinzuweisen, daß er die Funktionen des Auswählens der einzelnen Kandidaten-Kanalsequenzen für die optimale Kombinationssequenz und dann das Kombinieren der ausgewählten Kandidaten-Kanalsequenzen, die zusammen die optimale Kombinationssequenz ergeben, umfaßt, wobei, um die Sendesequenz am Ausgang 202 der Vorrichtung zu erhalten, die ausgewählten Kandidaten-Kanalsequenzen, die zusammen die optimale Kombinationssequenz ergeben, noch addiert werden müssen, wie es durch das Addiererzeichen in Fig. 4 gezeigt ist. An dieser Stelle sei noch einmal darauf hingewiesen, daß es äquivalente Lösungen sind, ob zunächst alle möglichen Kombinationssequenzen gebildet werden, um dann alle Kombinationssequenzen nach der optimalen Kombinationssequenz zu durchsuchen, um die optimale Kombinationssequenz dann auszugeben, oder ob die Kandidaten-Kanalsequenzen ausgewählt werden, die zusammen die optimale Kombinationssequenz ergeben, woraufhin dann lediglich die ausgewählten Kandidaten-Kanalsequenzen kombiniert werden, um die Sendesequenz zu erhalten.

Im nachfolgenden wird auf Fig. 9 eingegangen, um den Aufbau eines Informationsworts zu erläutern. Ein Informationswort 40, wie es am Eingang 14 in die Einrichtung 210, 214 oder 218 zum Erzeugen einer Mehrzahl von Kandidaten-Kanalsequenzen pro Informationskanal 204, 206, 208 eingespeist wird, besteht aus einer Mehrzahl von einzelnen Informationseinheiten 42, welche im Falle einer binären Ausgestaltung einzelne Bits sind. Gemäß einem Aspekt wird durch die Einrichtung 12 bzw. 12' zum Hinzufügen eines Etiketts (Fig. 1 bis Fig. 4) dem Informationswort 40 entweder ein tatsächliches Etikett oder ein Platzhalteretikett vorangestellt. Es sei darauf hingewiesen, daß das Platzhalteretikett die gleiche Länge hat wie ein tatsächliches Etikett. Typischerweise besteht das Etikett und somit auch das Platzhalter-Etikett aus einer Anzahl von einzelnen Bits 44, wobei die Anzahl der Etikettenbits 44 die Anzahl der möglichen Kandidaten-Kanalsequenzen bestimmt. Im Falle einer binären Ausgestaltung können durch vier Etikettbits bereits 16 Kandidaten eindeutig identifiziert werden. Bei einer einfachen Implementation reicht sogar ein einziges Etikettbit, mit dem bereits zwei unterschiedliche Kandidaten-Kanalsequenzen erzeugt werden können. Der invertierbare rückgekoppelte Kombinationsalgorithmus wird vorzugsweise an das Etikett angepaßt sein, derart, daß sein Gedächtnis so viele verschiedene Zustände einnehmen kann, wie viele verschiedenen Zahlen durch die Anzahl der Etikettbits dargestellt werden können, d. h. wieviel eindeutig unterscheidbare Kandidaten-Kanalsequenzen erzeugt werden können.

Im nachfolgenden wird auf Fig. 5 eingegangen, welche eine beispielhafte Implementation des invertierbaren rückgekoppelten Kombinationsalgorithmus darstellt. Der invertierbare rückgekoppelte Kombinationsalgorithmus kann beispielhaft mittels eines rückgekoppelten Schieberegisters implementiert werden, das eine bestimmte Anzahl von Verzögerungseinheiten aufweist, die in Fig. 5 mit D bezeichnet sind, und das darüberhinaus eine bestimmte Anzahl von XOR-Verknüpfungen umfaßt.

Im einzelnen implementiert das in Fig. 5 gezeigte Schieberegister einen invertierbaren rückgekoppelten Kombinationsalgorithmus, der durch ein Polynom $1+D+D^4$ bezeichnet werden kann, wobei das Zeichen "+" für eine XOR-Verknüpfung, die auch als Exklusiv-ODER-Operation bezeichnet wird, steht. Eine XOR-Verknüpfung hat bekannterweise folgende Eigenschaft:

$$0 + 0 = 0$$

$$0 + 1 = 1$$

$$1 + 0 = 1$$

$$1 + 1 = 0$$

Allgemein kann gesagt werden, daß ein Scrambler, der den invertierbaren rückgekoppelten Kombinationsalgorithmus ausführt, ein rückgekoppeltes binäres Schieberegister sein kann, das starke Ähnlichkeiten zu einem digitalen Filter hat. Jedes Verzögerungselement D speichert im Falle einer binären Implementation ein Bit, das entweder einen Wert von 0 oder einen Wert von 1 hat, und gibt dieses dann im nächsten Zeitschritt zum nächsten Verzögerungselement weiter, falls ein solches vorhanden ist. Es sei angemerkt, daß D beim binären Schieberegister für $z^{-1}$ bei digitalen Filtern steht, wo dann die Signalfolge als A(z) bezeichnet werden würde, während hier von einer Signalfolge A(D) gesprochen wird.

Im einzelnen umfaßt das in Fig. 5 dargestellte beispielhafte Schieberegister einen Eingang 50 und einen Ausgang 52. Am Eingang liegt die binäre Eingangsfolge U(D) an, welche das Informationswort samt Etikett ist. Am Ausgang liegt das kombinierte Informationswort A(D) an. Das in Fig. 5 gezeigte Schieberegister umfaßt einen Rückkopplungszweig, der an einem Ende 54 mit dem Ausgang verbunden ist, und der an seinem anderen Ende 56 mit einem der beiden Eingänge einer XOR-Verknüpfung verbunden ist, die mit ihrem anderen Eingang mit dem Eingang 50 des Schieberegisters verbunden ist. Der Rückkopplungszweig umfaßt bei dem in Fig. 5 gezeigten Beispiel für ein Schieberegister ein erstes Verzögerungselement 60a, ein zweites Verzögerungselement 60b, ein drittes Verzögerungselement 60c und ein viertes verzögerungselement 60d und ferner eine XOR-Verknüpfung 60e, die den Ausgangswert der ersten Verzögerungseinrichtung 60a mit dem Ausgangswert der vierten Verzögerungseinrichtung 60d XOR-verknüpft, um das Signal an dem zweiten Ende 56 des Rückkopplungszweigs zu erzeugen. Analog zu einem digitalen Filter läßt sich auch bei einem binären Schieberegister der Rückkopplungszweig mittels eines Polynoms ausdrücken. Da bei dem hier gezeigten Ausführungsbeispiel Abzweigungen nach dem ersten und dem vierten D-Element vorhanden sind, gilt:

$$A(D) = U(D) + D \cdot A(D) + D^4 \cdot A(D)$$

woraus sich folgende Übertragungsfunktion ergibt:

$$A(D)/U(D) = 1/(1 + D + D^4).$$

Das Rückkopplungspolynom kann also durch $1 + D + D^4$ beschrieben werden. Es sei darauf hingewiesen, daß durch ein Schieberegister jedes beliebige Rückkopplungspolynom unter Verwendung von Verzögerungselementen von XOR-Verknüpfungen erzeugt werden kann. Da sowohl die Verzögerungsoperation als auch die XOR-Operation lineare Operationen in GF(2) sind, ist die "Aufspaltung" der Operation des Schieberegisters möglich, derart, daß bei dem in Fig. 2 gezeigten zweiten Ausführungsbeispiel der vorliegenden Erfindung durch Verarbeiten des mit einem Platzhalter-Etikett versehenen Informationsworts und durch spätere Verknüpfung mit einer Verknüpfungssequenz dasselbe Resultat erreicht wird wie bei dem in Fig. 1 gezeigten ersten Ausführungsbeispiel.

Nachfolgend wird allgemein auf den Betrieb rückgekoppelter binärer Schieberegister eingegangen, um Eigenschaften von invertierbaren rückgekoppelten Kombinationsalgorithmen zu verdeutlichen. Wenn U(D) ein Impuls ist, d. h. eine "1" gefolgt von lauter Nullen, dann ist die Impulsantwort des Scramblers, d. h. des in Fig. 5 gezeigten Schieberegisters, eine Folge von Einsen und Nullen von unendlicher Länge, die als zufällige Folge erscheint. Daher wird diese Folge in der Technik auch als Pseudo-Noise-Sequenz (pn-Sequenz) bezeichnet. Der Scrambler ist ein lineares Gerät, da ja nur XOR- und Verzögerungsoperationen vorkommen, welche bezüglich der XOR-Arithmetik linear sind. Damit ist das Schieberegister auch invertierbar, um ein invertiertes Schieberegister erhalten zu können, das dann im Descrambler im Empfänger (Fig. 6) eingesetzt wird.

Wenn einer zu scrambelnden Folge $U_1(D)$ beispielsweise eine "1" als Präfix oder Etikett hinzugefügt wird, d. h. wenn gilt:

$$U(D) = [1\ U_1(D)]$$

wie es durch die Einrichtung 12 bzw. 12' bewerkstelligt wird, so überlagert sich die zur "1", d. h. zum Etikett, gehörige pn-Folge linear auf die zu $U_1(D)$ gehörige Ausgangsfolge $A_1(D)$, so daß gilt:

$$A(D) = [1\ (A_1(D) + pn\text{-}Folge)]$$

A(D) sieht also gänzlich anders aus als $A_1(D)$, was nur durch das Etikett, das im Beispiel eine "1" war, erreicht wurde.

Wenn hingegen vor $U_1(D)$ eine "0" gesetzt wird, so gilt:

$$A(D) = [0\ A_1(D)]$$

Bei einem bevorzugten Ausführungsbeispiel wird vor die zu übertragende Folge $U_1(D)$ nicht nur ein 1 Bit langes Etikett gesetzt, sondern ein mehrere Bits langes Etikett, um nicht nur zwei verschiedene Kandidaten-Kanalsequenzen (im Falle einer einzigen 0 und im Falle einer einzigen 1) sondern z. B. 16 verschiedene Kandidaten-Kanalsequenzen zu erhalten. In diesem Fall wird jetzt die Ausgangsfolge $A_1(D)$ mit mehreren zeitverschobenen pn-Folgen überlagert. Die resultierende Ausgangsfolge A(D) sieht somit zufällig aus und unterscheidet sich stark von den Ausgangsfolgen für andere Etiketten, so daß die Wahrscheinlichkeit größer wird, daß durch Kombination mit dieser Kandidaten-Kanalsequenz eine kombinierte Sequenz mit einem niedrigen Spitzenwert entstehen wird.

Anschaulich ausgedrückt kann die Funktion des Etiketts auch derart dargestellt werden, daß das Etikett, das ja zuerst in das Schieberegister läuft, das Schieberegister bereits in einen bestimmten Zustand treibt, von dem ausgehend dann das in der Eingangsfolge dem Etikett folgende Informationswort gescrambelt, d. h. durch den invertierbaren rückgekoppelten Kombinationsalgorithmus verarbeitet wird.

Es sei darauf hingewiesen, daß sämtliche Verzögerungseinheiten des Rückkopplungszweigs des Schieberegisters vor einem Erzeugen einer anderen Kandidaten-Kanalsequenz unter Verwendung eines anderen Etiketts auf einen definierten Zustand zurückgesetzt werden müssen, welche vorzugsweise der 0-Zustand ist, und welcher vorzugsweise auch der Zustand ist, der durch das Platzhalter-Etikett dargestellt wird.

Wie es bereits ausgeführt worden ist, ist es nicht wesentlich, daß die Einrichtung zum Hinzufügen der Etiketten bzw. des Platzhalter-Etiketts das Etikett unmittelbar als Präfix dem Informationswort voranstellt, sondern daß es prinzipiell genügt, daß das Etikett dem Informationswort irgendwie hinzugefügt wird, um mit dem Informationswort kombiniert werden zu können. Je weiter vorne das Etikett jedoch steht, um so unterschiedlicher sind die einzelnen Kandidaten-Kanalsequenzen insgesamt, wenn kein Interleaver verwendet wird. Wird aber ein Interleaver eingesetzt, so ist der Einfluß des Orts des Etiketts im/am Informationsworts auf die Unterschiedlichkeit der Kandidaten-Kanalsequenzen noch reduziert. In diesem Fall muß der Empfänger jedoch ebenfalls wissen, wo das Etikett im Informationswort steht, um es zu extrahieren, um das Informationswort ohne Etikett zu erhalten.

Fig. 6 zeigt eine Vorrichtung zum Ermitteln von Informationen eines Informationskanals aus einer empfangenen Sendesequenz 250, die an einem Eingang der in Fig. 6 gezeigten Vorrichtung anliegt. Nachdem die unter Verwendung unterschiedlicher Codesequenzen für unterschiedliche Informationskanäle und unter Verwendung von unterschiedlichen Kandidaten-Kanalsequenzen für den ersten Informationskanal und optional für weitere Informationskanäle erzeugte Sendesequenz empfangen worden ist, muß schrittweise zunächst der einzelne Informationskanal aus der empfangenen Sendesequenz extrahiert werden, um dann die Kandidaten-Kanalsequenz zu erhalten, welche dann noch verarbeitet werden muß, um wieder auf das Informationswort bzw. die Informationen, die die entsprechende Kandidaten-Kanalsequenz hat, schließen zu können.

Zum Extrahieren eines Kanals wird, wie es bereits allgemein ausgeführt worden ist, für jeden Informationskanal ein Korrelator 252 verwendet, welcher nun, um jeden Informationskanal extrahieren zu können, jeweils durch die Codesequenz eingestellt bzw. gesteuert wird, die diesem Kanal zugeordnet ist. Damit wird die Beaufschlagung mit der entsprechenden Codesequenz im Empfänger wieder rückgängig gemacht, derart, daß hinter dem Korrelator dieselbe Anzahl an beispielsweise Bits vorliegt, die - abgesehen von eventuellen Kanalcodierungen, am Eingang der ersten, zweiten oder dritten Einrichtung zum Erzeugen von Fig. 1 vorhanden war. Jedem Korrelator 252 ist eine Einrichtung 254 zum Verarbeiten nachgeschaltet, um aus der vor der Einrichtung 254 vorliegenden entsprechenden Kandidaten-Kanalsequenz auf die Information, die dieser Kandidaten-Kanalsequenz zugrunde liegt, schließen zu können.

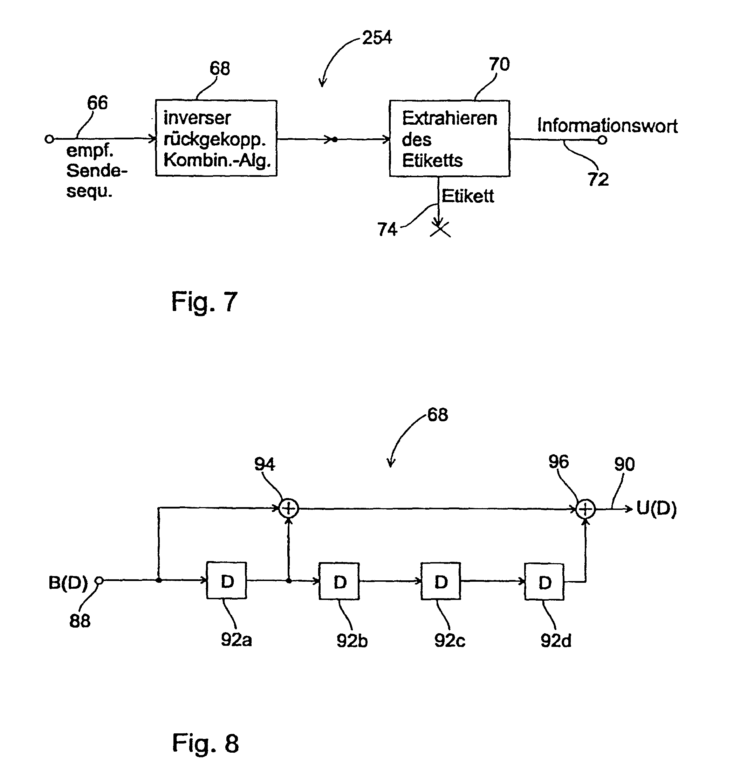

Der Empfänger steht somit vor der Aufgabe, zu eruieren, auf welche Art und Weise bzw. wie die zu verarbeitende Kandidaten-Kanalsequenz von den zugrunde liegenden Informationen abgeleitet worden ist, um diese Ableitung bzw. Verarbeitung wieder rückgängig zu machen. Wurde ein SLM-Konzept verwendet, bei dem die Übertragung von Seiteninformationen vonnöten war, so müssen die entsprechenden Einrichtungen 254 zum Verarbeiten durch mitübertragenen Seiteninformationen entsprechend von empfangener Sendesequenz zu empfangener Sendesequenz neu eingestellt werden. Wurden die Kandidaten-Kanalsequenzen jedoch unter Verwendung des invertierbaren rückgekoppelten Kombinationsalgorithmus, wie er bezugnehmend auf die Fig. 2 und 3 dargestellt worden ist, verarbeitet, so ist eine explizite Übertragung von Seiteninformationen nicht vonnöten. Eine Einrichtung 254 zum Verarbeiten der Kandidaten-Kanalsequenz, um die Information für den ersten Informationskanal zu ermitteln, könnte dann beispielsweise ausgestaltet sein, wie es in Fig. 7 gezeigt ist.

Im nachfolgenden wird auf Fig. 7 eingegangen, welche eine erfindungsgemäße Vorrichtung zum Ermitteln eines Informationsworts aus einer empfangenen Sendesequenz (nach einer Vorverarbeitung durch Korrelator 252, Deinterleaver und Kanal-Decodierer) zeigt, die in einem digitalen Nachrichtenempfänger enthalten sein kann. An einem Eingang 66 wird eine empfangene Sendesequenz eingespeist. Nun besteht die Aufgabe, die im Sender durchgeführte Kombinationsoperation wieder rückgängig zu machen, um das Informationswort zu erhalten. Hierzu wird die empfangene Sendesequenz unter Verwendung eines Algorithmus verarbeitet, der zum rückgekoppelten Kombinationsalgorithmus, der im Sender verwendet wurde, um die empfangene Sendesequenz zu erzeugen, invers ist. Dies geschieht durch eine Einrichtung 68, welche wieder, abgesehen von Übertragungsfehlern, das in Fig. 9 gezeigte Informationswort samt dem Etikett ausgibt. Nun muß nur noch das Etikett extrahiert werden 70, um das Informationswort an einem Ausgang 72 zu erhalten. Es sei angemerkt, daß das Etikett selbst nicht explizit benötigt wird, da es bereits dazu gedient hat, den inversen rückgekoppelten Kombinationsalgorithmus, der nun aufgrund der Inversion ein vorwärts gekoppelter Algorithmus ist, in einen Anfangszustand zu treiben, welcher auf den durch das Etikett im Sender bewirkten Anfangszustand bezogen ist. Das Etikett kann somit einfach verworfen werden, wie es in Fig. 7 bei 74 schematisch dargestellt ist.

Es sei darauf hingewiesen, daß die Einrichtung 68 zum Durchführen des inversen Algorithmus ebenso wie die Einrichtung 16 zum Durchführen des rückgekoppelten Kombinationsalgorithmus im Sender vor jeder Decodierung eines Informationsworts in einen definierten Zustand zurückgesetzt werden muß, der vorzugsweise der 0-Zustand ist. Erst dann darf das vom Decodierer 84 ausgegebene Informationswort eingespeist werden, das unmittelbar dazu führt, daß aufgrund des Etiketts die Verzögerungseinrichtungen im Vorwärtskopplungszweig einen bestimmten Zustand einnehmen, von dem ausgehend dann das kombinierte Informationswort wieder dekombiniert wird.

Es sei darauf hingewiesen, daß der Empfänger gewissermaßen als "Nebenprodukt" explizit in der Lage ist, die Kandidaten-Nummer bzw. das Etikett zu ermitteln, daß er dies jedoch nicht explizit benötigt, um die Daten wiederzugewinnen.

Ein in Fig. 8 gezeigtes vorwärts gekoppeltes binäres Schieberegister, das in der Einrichtung 68 von Fig. 7 vorgesehen sein kann, umfaßt wiederum einen Eingang 88 sowie einen Ausgang 90. Am Eingang liegt das mit B(D) bezeichnete kombinierte Informationswort samt kombiniertem Etikett an. Diese empfangene Sendesequenz wird nun Bit für Bit eingespeist, um nach und nach die vier Verzögerungseinheiten 92a - 92d in ihre gewünschten Zustände zu versetzen, um das am Eingang 88 nach und nach einströmende kombinierte Informationswort wieder zu dekombinieren bzw. zu descrambeln. Entsprechend enthält das in Fig. 8 gezeigte binäre Schieberegister auch wieder zwei XOR-Verknüpfungseinrichtungen 94 und 96. Die Ausgangsfolge am Ausgang 90, die wieder mit U(D) bezeichnet ist, wird dann in die Einrichtung 70 zum Extrahieren des Etiketts eingespeist, um schließlich das Informationswort zu erhalten.

Die vorliegende Erfindung liefert größte Flexibilität bereits bei einer geringen Anzahl von Kandidaten-Kanalsequenzen lediglich nur in einem Informationskanal von mehreren Informationskanälen. Die Anzahl der einem Teilnehmer bereitgestellten möglichen Kandidaten-Kanalsequenzen für jeden Teilnehmer kann beliebig und insbesondere auch unterschiedlich gewählt werden. Wenn man beispielsweise 16 Teilnehmer hat, dann könnte man für die ersten vier Teilnehmer je zwei Kandidaten-Kanalsequenzen bereitstellen, und für die restlichen Teilnehmer nur eine einzige Kandidaten-Kanalsequenz. In so einem Fall braucht man also für die restlichen 12 Teilnehmer keine Einrichtungen zum Erzeugen der verschiedenen Kandidaten-Kanalsequenzen, wie z. B. den Scrambler 16 oder die Einrichtung zum Hinzufügen eines Etiketts bzw. eines Platzhalter-Etiketts (Fig. 4). Es existieren nun 16 mögliche Summensignale, da die ersten vier Teilnehmer jeweils zwei mögliche Kandidaten-Kanalsequenzen besitzen, während bei den restlichen 12 Teilnehmern nur eben eine Kandidaten-Kanalsequenz vorhanden ist. Unter diesen 16 möglichen kombinierten Sendesequenzen wird nun die optimale Sendesequenz ausgewählt. Dieselbe Konstellation könnte auch erreicht werden, wenn lediglich zwei Kanäle je vier unterschiedliche Kandidaten-Kanalsequenzen haben. Für die anderen Informationskanälen, in denen lediglich eine einzige Kandidaten-Kanalsequenz existiert, würden dann auch im Empfänger keine entsprechenden verarbeitungseinrichtungen benötigt. Indem somit die Auswahl bzw. Optimierung erst nach dem Kombinieren stattfindet und nicht für die einzelnen Informationskanäle unabhängig voneinander durchgeführt wird, kann bereits mit einer kleinen Anzahl von Kandidaten-Kanalsequenzen eine hohe Diversität erreicht werden, so daß davon ausgegangen werden kann, daß die einzelnen zur Verfügung stehenden kombinierten Sequenzen ausreichend unterschiedlich sind, damit eine Sendesequenz vorhanden ist, die zu einer geringeren Außerbandstrahlung führt als die anderen zur Auswahl stehenden kombinierten Sequenzen.

**Patentansprüche**

1. Vorrichtung zum Erzeugen einer Sendesequenz, die Informationen aus einer Mehrzahl von Informationskanälen aufweist, mit folgenden Merkmalen:

   einer ersten Einrichtung (210) zum Erzeugen einer Mehrzahl von voneinander unterschiedlichen Kandidaten-Kanalsequenzen aus einer Information eines ersten Informationskanals (204) der Mehrzahl von Informationskanälen (204, 206, 208) unter Verwendung einer ersten Codesequenz (212), die dem ersten Informationskanal (204) zugeordnet ist, wobei jede Kandidaten-Kanalsequenz dieselbe Information wie die Information des ersten Informationskanals trägt;

   einer zweiten Einrichtung (214) zum Erzeugen einer Kandidaten-Kanalsequenz für einen zweiten Informationskanal (206) aus der Mehrzahl von Informationskanälen (204, 206, 208) unter Verwendung einer zweiten Codesequenz (216), die dem zweiten Informationskanal zugeordnet ist und sich von der ersten Codesequenz (212) unterscheidet;

   einer Einrichtung (222, 228, 230) zum Ermitteln einer kombinierten Sequenz als Sendesequenz durch Kombinieren der Kandidaten-Kanalsequenzen, die miteinander kombiniert die Sendesequenz ergeben, die ein vorbestimmtes Kriterium erfüllt.

2. Vorrichtung nach Anspruch 1, bei der die Einrichtung (222, 228, 230) zum Ermitteln ausgebildet ist, um jede Kandidaten-Kanalsequenz für den ersten Informationskanal mit der Kandidaten-Kanalsequenz für den zweiten Informationskanal zu kombinieren (222), um eine Mehrzahl von kombinierten Sequenzen (224a, 224b) zu erhalten, und um die kombinierte Sequenz aus der Mehrzahl von kombinierten Sequenzen als Sendesequenz auszuwählen (228), die das vorbestimmte Kriterium erfüllt.

3. Vorrichtung nach Anspruch 1, bei der die Einrichtung (222, 228, 230) zum Ermitteln ausgebildet ist, um die Sendesequenz zu bestimmen, um die Kandidaten-Sendesequenzen auszuwählen (230), die miteinander kombiniert die Sendesequenz ergeben, und um die ausgewählten Kandidaten-Sendesequenzen zu kombinieren (222), um die ermittelte Sendesequenz zu erhalten.

4. Vorrichtung nach einem der vorhergehenden Ansprüche, bei der die zweite Einrichtung (214) zum Erzeugen angeordnet ist, um neben der einen Kandidaten-Kanalsequenz zumindest eine weitere Kandidaten-Kanalsequenz unter Verwendung der zweiten Codesequenz (216) zu erzeugen, die sich von der einen Kandidaten-Kanalsequenz unterscheidet, wobei die eine Kandidaten-Kanalsequenz und die zumindest eine weitere Kandidaten-Kanalsequenz die gleichen Informationen tragen, wobei die Einrichtung (222) zum Kombinieren angeordnet ist, um jede Kandidaten-Kanalsequenz für den ersten Informationskanal mit jeder Kandidaten-Kanalsequenz für den zweiten Informationskanal zu kombinieren, um die Mehrzahl von kombinierten Sequenzen zu erhalten.

5. Vorrichtung nach Anspruch 4, bei der sich die Anzahl der Kandidaten-Kanalsequenzen für den ersten Informationskanal (204) von der Anzahl der Kandidaten-Kanalsequenzen für den zweiten Informationskanal (206) unterscheidet.

6. Vorrichtung nach einem der vorhergehenden Ansprüche, die ferner folgendes Merkmal aufweist:

   eine dritte Einrichtung (220) zum Erzeugen einer Mehrzahl von voneinander unterschiedlichen Kandidaten-Kanalsequenzen für einen dritten Informationskanal (208) unter Verwendung einer dritten Codesequenz (220), die dem dritten Informationskanal zugeordnet ist,

   wobei die Einrichtung (222) zum Kombinieren angeordnet ist, um jede Kandidaten-Kanalsequenz eines Informationskanals mit je einer Kandidaten-Kanalsequenz aus je einem weiteren Informationskanal zu kombinieren, derart, daß jede kombinierte Sequenz durch Kombination genau einer Kandidaten-Kanalsequenz von jedem Informationskanal gebildet ist.

7. Vorrichtung nach einem der vorhergehenden Ansprüche, bei der die Einrichtungen zum Erzeugen für die verschiedenen Informationskanäle angeordnet sind, um unter Verwendung von Codesequenzen für die Informationskanäle zu arbeiten, die zueinander im wesentlichen orthogonal sind.

8. Vorrichtung nach einem der vorhergehenden Ansprüche, bei der die Einrichtung (222) zum Kombinieren angeordnet ist, um die entsprechenden Kandidaten-Kanalsequenzen miteinander zu addieren (226), um eine kombinierte Sequenz (224a, 224b) zu erhalten.

9. Vorrichtung nach einem der vorhergehenden Ansprüche, bei der zumindest die erste Einrichtung (210) zum Erzeugen einer Mehrzahl von voneinander unterschiedlichen Kandidaten-Kanalsequenzen folgende Merkmale aufweist:

eine Einrichtung (12) zum Hinzufügen eines Etiketts (44) zu einem Informationswort des ersten Informationskanals;

eine Einrichtung (16) zum Verarbeiten des Informationsworts samt hinzugefügtem Etikett durch einen invertierbaren rückgekoppelten Kombinationsalgorithmus, um ein kombiniertes Informationswort zu erhalten, in dem die Informationseinheiten miteinander und/oder mit dem hinzugefügten Etikett kombiniert sind, derart, daß das kombinierte Informationswort durch das Etikett eindeutig identifiziert ist; und

eine Einrichtung (18a) zum Beaufschlagen des kombinierten Informationsworts mit der ersten Codesequenz (212), die dem ersten Kanal zugeordnet ist.

10. Vorrichtung nach Anspruch 9, bei der der Einrichtung (18a) zum Beaufschlagen ein Redundanzcodierer (17a) und/oder ein Interleaver (17b) vorgeschaltet ist.

11. Vorrichtung nach einem der Ansprüche 1 bis 8, bei der zumindest die erste Einrichtung (210) zum Erzeugen einer Mehrzahl von Kandidaten-Kanalsequenzen folgende Merkmale aufweist:

eine Einrichtung (12') zum Hinzufügen eines Platzhalter-Etiketts zu einem Informationswort des ersten Informationskanals;

eine Einrichtung (16) zum Verarbeiten des Informationsworts samt hinzugefügtem Platzhalter-Etikett durch einen invertierbaren rückgekoppelten Kombinationsalgorithmus, um ein kombiniertes Informationswort zu erhalten, in dem die Informationseinheiten miteinander und/oder mit dem hinzugefügten Platzhalter-Etikett (13') kombiniert sind;

eine Einrichtung (19) zum Verknüpfen des kombinierten Informationsworts oder eines von dem kombinierten Informationswort abgeleiteten Worts mit einer Verknüpfungssequenz (VS), die unter Verwendung desselben rückgekoppelten Kombinationsalgorithmus aus einem Etikett (22) bestimmt ist, um ein verknüpftes Informationswort zu erhalten, das durch das Etikett eindeutig identifiziert ist; und

eine Einrichtung (18'a) zum Beaufschlagen des verknüpften Informationsworts mit der ersten Codesequenz (212).

12. Vorrichtung nach Anspruch 11, bei der der Einrichtung (16) zum Verarbeiten ein Redundanzcodierer (17a) und/oder ein Interleaver (17b) nachgeschaltet ist, um das von dem kombinierten Informationswort abgeleitete Wort zu bilden.

13. Vorrichtung nach einem der Ansprüche 9 bis 12, bei der die Einrichtung (16) zum Verarbeiten durch einen invertierbaren rückgekoppelten Kombinationsalgorithmus ein Schieberegister mit folgenden Merkmalen umfaßt:

einem Eingang (50);

einem Ausgang (52);

einem Rückkopplungszweig mit einem ersten und einem zweiten Ende (54, 56), der mit seinem ersten Ende (54) mit dem Ausgang (52) verbunden ist und zumindest eine Verzögerungseinheit (60a-60d) aufweist; und

eine XOR-Verknüpfungseinrichtung (56) zum XOR-Verknüpfen einer Informationseinheit am Eingang (50) mit einem am zweiten Ende (56) des Rückkopplungszweigs anliegenden Wert, wobei die XOR-Verknüpfungseinrichtung (56) ausgangsseitig mit dem Ausgang (52) verbunden ist.

14. Vorrichtung nach einem der vorhergehenden Ansprüche, die angeordnet ist, um in einem Sender einer Basisstation eines Mobilkommunikationssystems verwendet zu werden.

15. Verfahren zum Erzeugen einer Sendesequenz, die Informationen aus einer Mehrzahl von Informationskanälen aufweist, mit folgenden Schritten:

Erzeugen (210) einer Mehrzahl von voneinander unterschiedlichen Kandidaten-Kanalsequenzen aus einer Information eines ersten Informationskanals (204) der Mehrzahl von Informationskanälen (204, 206, 208) unter Verwendung einer ersten Codesequenz (212), die dem ersten Informationskanal (204) zugeordnet ist, wobei jede Kandidaten-Kanalsequenz dieselbe Information wie die Information des ersten Informationskanals trägt;

Erzeugen (214) einer Kandidaten-Kanalsequenz für einen zweiten Informationskanal (206) aus der Mehrzahl von Informationskanälen (204, 206, 208) unter Verwendung einer zweiten Codesequenz (216), die dem zweiten Informationskanal zugeordnet ist und sich von der ersten Codesequenz (212) unterscheidet;

Ermitteln (222, 228, 230) einer kombinierten Sequenz als Sendesequenz durch Kombinieren der Kandidaten-Kanalsequenzen, die miteinander kombiniert die Sendesequenz ergeben, die ein vorbestimmtes Kriterium erfüllt.

16. Verfahren nach Anspruch 15, bei dem im Schritt des Ermittelns
jede Kandidaten-Kanalsequenz für den ersten Informationskanal mit der Kandidaten-Kanalsequenz für den zweiten Informationskanal kombiniert wird, um eine Mehrzahl von kombinierten Sequenzen (224a, 224b) zu erhalten; und
die kombinierte Sequenz aus der Mehrzahl von kombinierten Sequenzen als Sendesequenz ausgewählt wird, die ein vorbestimmtes Kriterium erfüllt.

17. Verfahren nach Anspruch 15, bei dem im Schritt des Ermittelns
die Sendesequenz bestimmt wird,
die Kandidaten-Sendesequenzen ausgewählt werden (230), die miteinander kombiniert die Sendesequenz ergeben, und
die ausgewählten Kandidaten-Sendesequenzen kombiniert werden (222), um die ermittelte Sendesequenz zu erhalten.

18. Vorrichtung zum Ermitteln von Informationen eines Informationskanals aus einer empfangenen Sendesequenz (250), die unter Verwendung unterschiedlicher Codesequenzen für unterschiedliche Informationskanäle und unter Verwendung unterschiedlicher Kandidaten-Kanalsequenzen für zumindest einen Informationskanal erzeugt worden ist, mit folgenden Merkmalen:

einer Einrichtung (252) zum Extrahieren der Kandidaten-Kanalsequenz, die dem einen Informationskanal entspricht, aus der empfangenen Sendesequenz (250) unter Verwendung eines Korrelators, dessen Eigenschaften durch eine Codesequenz definiert ist, die dem einen Informationskanal zugeordnet ist; und

einer Einrichtung (254) zum Verarbeiten der Kandidaten-Kanalsequenz, um die Information für den einen Informationskanal zu ermitteln, wobei die Einrichtung zum Verarbeiten der Kandidaten-Kanalsequenz derart angeordnet ist, daß die Verarbeitung der Information beim Erzeugen dieser Kandidaten-Kanalsequenz invertiert wird.

19. Vorrichtung nach Anspruch 18, bei der due Einrichtung (254) zum Verarbeiten folgende Merkmale aufweist:

eine Einrichtung (68) zum Verarbeiten der empfangenen Sendesequenz durch einen zum invertierbaren rückgekoppelten Kombinationsalgorithmus inversen Algorithmus, um eine Sequenz zu erhalten, die das Informationswort und das Etikett enthält; und

eine Einrichtung (70) zum Extrahieren des Etiketts aus der Sequenz, um das Informationswort zu erhalten.

20. Vorrichtung nach Anspruch 19, bei der die Einrichtung zum Verarbeiten (68) ein vorwärts gekoppeltes Schieberegister aufweist, das zu einem beim Erzeugen verwendeten rückgekoppelten Schieberegister genau invers ist.

21. Verfahren zum Ermitteln von Informationen eines Informationskanals aus einer empfangenen Sendesequenz (250), die unter Verwendung unterschiedlicher Codesequenzen für unterschiedliche Informationskanäle und unter Verwendung unterschiedlicher Kandidaten-Kanalsequenzen für zumindest einen Informationskanal erzeugt worden ist, mit folgenden Schritten:

Extrahieren (252) der Kandidaten-Kanalsequenz, die dem einen Informationskanal entspricht, aus der empfangenen Sendesequenz (250) unter Verwendung eines Korrelators, dessen Eigenschaften durch eine Codesequenz definiert ist, die dem einen Informationskanal zugeordnet ist; und

Verarbeiten (254) der Kandidaten-Kanalsequenz, um die Information für den einen Informationskanal zu ermitteln, wobei die Einrichtung zum Verarbeiten der Kandidaten-Kanalsequenz derart angeordnet ist, daß die Verarbeitung der Information beim Erzeugen dieser Kandidaten-Kanalsequenz invertiert wird.

## Claims

1. An apparatus for generating a transmit sequence comprising information from a plurality of information channels, comprising:

   a first means (210) for generating a plurality of different candidate channel sequences from an information of a first information channel (204) of the plurality of information channels (204, 206, 208) using a first code sequence (212) associated with the first information channel (204), wherein each candidate channel sequence carries the same information as the information of the first information channel;

   a second means (214) for creating a candidate channel sequence for a second information channel (206) from a plurality of information channels (204, 206, 208) using a second code sequence (216) associated with the second information channel and differing from the first code sequence (212);

   means (222, 228, 230) for retrieving a combined sequence as a transmit sequence by combining the candidate channel sequences, which result in a transmit sequence fulfilling a predetermined criterion when same are combined with each other.

2. The apparatus according to claim 1, wherein the means (222, 228, 230) for retrieving is implemented to combine (222) every candidate channel sequence for the first information channel with the candidate channel sequence for the second information channel in order to obtain a plurality of combined sequences (224a, 224b), and to select (228) the combined sequence from the plurality of combined sequences as a transmit sequence fulfilling the predetermined criterion.

3. The apparatus according to claim 1, wherein the means (222, 228, 230) for retrieving is implemented to determine the transmit sequence, to select (230) the candidate transmit sequences which result in the transmit sequence if they are combined with each other, and to combine (222) the selected candidate transmit sequences to obtain the retrieved transmit sequence.

4. The apparatus according to one of the preceding claims, wherein the second means (214) is arranged for generating in order to generate at least one further candidate channel sequence apart from the one candidate channel sequence using the second code sequence (216), which is different from the one candidate channel sequence, wherein the one candidate channel sequence and the at least one further candidate channel sequence carry the same information, wherein the means (222) for combining is arranged to combine each candidate channel sequence for the first information channel with each candidate channel sequence for the second information channel in order to obtain the plurality of combined sequences.

5. The apparatus according to claim 4, wherein the number of candidate channel sequences for the first information channel (204) is different from the number of candidate channel sequences for the second information channel (206).

6. The apparatus according to one of the preceding claims, further comprising:

   a third means (220) for generating a plurality of different candidate channel sequences for a third information channel (208) using a third code sequence (220) associated with the third information channel,

   wherein the means (222) is arranged for combining in order to combine every candidate channel sequence of an information channel with one candidate channel sequence each from one further information channel, such, that each combined sequence is formed by a combination of exactly one candidate channel sequence of every information channel.

7. The apparatus according to one of the preceding claims, wherein the means for generating the different information channels are arranged to operate using code sequences for the information channels which are basically orthogonal to each other.

8. The apparatus according to one of the preceding claims, wherein the means (222) is arranged for combining in order to add up the respective candidate channel sequences (226) to obtain a combined sequence (224a, 224b).

9. The apparatus according to one of the preceding claims, wherein at least the first means (210) for generating a plurality of different candidate channel sequences comprises the following:

   means (12) for adding a tag (44) to an information word of the first information channel;

   means (16) for processing the information word and the added tag by an invertible feed-back combination algorithm to receive a combined information word, in which the information units are combined with each other and/or with the added tag, such, that the combined information word is uniquely identified by the tag; and

means (18a) for weighting the combined information word with the first code sequence (212) associated with the first channel.

10. The apparatus according to claim 9, wherein a redundancy encoder (17a) and/or an interleaver (17b) is connected upstream to the weighting means (18a).

11. The apparatus according to one of claims 1 to 8, wherein the at least one means (210) for generating a plurality of candidate channel sequences comprises the following:

means (12') for adding a place holder tag to an information word of the first information channel;

means (16) for processing the information word and the added place holder tag by an invertible feed-back combination algorithm in order to obtain a combined information word, in which the information units are combined with each other and/or with the added place holder tag (13');

means (19) for linking the combined information word or one of the words derived from the combined information word with a linking sequence (LS) determined using the same feed-back combination algorithm from a tag (22) in order to receive a linked information word uniquely identified by the tag; and

means (18'a) for weighting the linked information word with the first code sequence (212).

12. The apparatus according to claim 11, wherein a redundancy encoder (17a) and/or an interleaver (17b) is connected downstream to the means (16) for processing in order to generate a word derived from the combined information word.

13. The apparatus according to one of claims 9 to 12, wherein the means (16) for processing by an invertible feed-back combination algorithm includes a shift register, further comprising:

an input (50);

an output (52);

a feed-back path with a first and a second end (54, 56), wherein its first end (54) is connected to the output (52) and comprises at least one delay unit (68 - 60D); and

an XOR linking unit (56) for XORing an information unit at the input (50) with a value applied to the second end (56) of the feed-back path, wherein the XOR linking means (56) is connected to the output (52) at the output site.

14. The apparatus according to one of the preceding claims, arranged in order to be used in a transmitter of a base station of a mobile communication system.

15. A method for generating a transmit sequence comprising the information from a plurality of information channels, comprising the following steps:

generating (210) a plurality of different candidate channel sequences from information of a first information channel (204) of the plurality of information channels (204, 206, 208) using a first code sequence (212) associated with the first information channel (204), wherein each candidate channel sequence carries the same information as the information of the first information channel;

generating (214) a candidate channel sequence for a second information channel (206) from a plurality of information channels (204, 206, 208) using a second code sequence (216) associated with the second information channel and different from the first code sequence (212);

retrieving (222, 228, 230) a combined sequence as a transmit sequence by combining the candidate channel sequences which result in a transmit sequence fulfilling a predetermined criterion when same are combined with each other.

16. The method according to claim 15, wherein in the retrieving step
each candidate channel sequence for the first information channel is combined with the candidate channel sequence for the second information channel in order to obtain a plurality of combined sequences (224a, 224b); and
the combined sequence is selected from the plurality of combined sequences as a transmit sequence fulfilling a predetermined criterion.

17. The method according to claim 15, wherein in the retrieving step
the transmit sequence is determined,
the candidate transmit sequences are selected (230) resulting in the transmit sequence when they are combined with each other,
the selected candidate transmit sequences are combined (222) to obtain the retrieved transmit sequence.

18. An apparatus for retrieving information of an information channel from a received transmit sequence (215), created using different code sequences for different information channels and using different candidate channel sequences for at least one information channel, comprising:

means (252) for extracting the candidate channel sequence corresponding to the one information channel from the received transmit sequence (250) using a correlator, whose properties are defined by a code sequence associated with the one information channel; and

means (254) for processing the candidate channel sequence to determine the information for the one information channel, wherein the means for processing the candidate channel sequence is arranged such, that the processing of the information is inverted when generating the candidate channel sequence.

19. The apparatus according to claim 18, wherein the means (254) for processing comprises:

means (68) for processing the received transmit sequence by an algorithm inverse to the invertible feed-back combination algorithm in order to obtain a sequence containing the information word and the tag; and
means (60) for extracting the tag from the sequence in order to obtain the information word.

20. The apparatus according to claim 19, wherein the processing means (68) comprises a forward coupled shift register, which is exactly inverse to a feed-back shift register used during generating.

21. A method for retrieving information of an information channel from a received transmit sequence (250) created using different code sequences for different information channels and using different candidate channel sequences for at least one information channel, comprising:

extracting (252) the candidate channel sequence corresponding to an information channel from the received transmit sequence (250) using a correlator, the properties of which are defined by a code sequence associated with the one information channel; and

processing (254) the candidate channel sequence in order to retrieve the information for the one information channel, wherein the means for processing a candidate channel sequence is arranged such, that the processing of the information is inverted when generating this candidate channel sequence.

**Revendications**

1. Dispositif de génération d'une séquence d'émission présentant des informations d'une pluralité de canaux d'information, aux caractéristiques suivantes :

un premier dispositif (210) destiné à générer une pluralité de séquences de canaux candidates différentes l'une de l'autre à partir d'une information d'un premier canal d'information (204) de la pluralité de canaux d'information (204, 206, 208) à l'aide d'une première séquence de codes (212) associée au premier canal d'information (204), chaque séquence de canaux candidate portant la même information que l'information du premier canal d'information ;
un deuxième dispositif (214) destiné à générer une séquence de canaux candidate pour un deuxième canal d'information (206) à partir de la pluralité de canaux d'information (204, 206, 208) à l'aide d'une deuxième séquence de codes (216) associée au deuxième canal d'information et qui diffère de la première séquence de codes (212) ;
un dispositif (222, 228, 230) destiné à déterminer une séquence combinée comme séquence d'émission, en combinant les séquences de canaux candidates qui, combinées l'une avec l'autre, donnent la séquence d'émission remplissant un critère prédéterminé.

2. Dispositif selon la revendication 1, dans lequel le dispositif (222, 228, 230) destiné à déterminer est réalisé
de manière à combiner chaque séquence de canaux candidate pour le premier canal d'information avec la séquence de canaux candidate pour le deuxième canal d'information (222), pour obtenir une pluralité de séquences combinées (224a, 224b), et
de manière à sélectionner parmi la pluralité de séquences combinées, comme séquence d'émission (228), la séquence combinée qui remplit le critère prédéterminé.

3. Dispositif selon la revendication 1, dans lequel le dispositif (222, 228, 230) destiné à déterminer est réalisé
de manière à déterminer la séquence d'émission,

de manière à sélectionner les séquences d'émission candidates (230) qui, combinées l'une avec l'autre, donnent la séquence d'émission, et

de manière à combiner les séquences d'émission candidates sélectionnées (222), pour obtenir la séquence d'émission déterminée.

4. Dispositif selon l'une des revendications précédentes, dans lequel le deuxième dispositif (214) destiné à générer est disposé de manière à générer, outre l'une séquence de canaux candidate, au moins une autre séquence de canaux candidate à l'aide de la deuxième séquence de canaux candidate, l'une séquence de une autre séquence de canaux candidate portent les mêmes informations, le dispositif (222) destiné à combiner étant disposé de manière à combiner chaque séquence de canaux candidate pour le premier canal d'information avec chaque séquence de canaux candidate pour le deuxième canal d'information, pour obtenir la pluralité de séquences combinées.

5. Dispositif selon la revendication 4, dans lequel le nombre de séquences de canaux candidates pour le premier canal d'information (204) diffère du nombre de séquences de canaux candidates pour le deuxième canal d'information.

6. Dispositif selon l'une des revendications précédentes, présentant, par ailleurs, la caractéristique suivante :

un troisième dispositif (220) destiné à générer une pluralité de séquences de canaux candidates différentes l'une de l'autre pour un troisième canal d'information (208) à l'aide d'une troisième séquence de codes (220) associée au troisième canal d'information,

le dispositif (222) destiné à combiner étant disposé de manière à combiner chaque séquence de canaux candidate d'un canal d'information avec chaque fois une séquence de canaux candidate de chaque fois un autre canal d'information, de sorte que chaque séquence combinée soit formée par la combinaison de précisément une séquence de canaux candidate de chaque canal d'information.

7. Dispositif selon l'une des revendications précédentes, dans lequel les dispositifs destinés à générer pour les différents canaux d'information sont disposés de manière à fonctionner à l'aide de séquences de codes pour les canaux d'information qui sont sensiblement orthogonaux entre eux.

8. Dispositif selon l'une des revendications précédentes, dans lequel le dispositif (222) destiné à combiner est disposé de manière à additionner entre elles les séquences de canaux candidates correspondantes (226), pour obtenir une séquence combinée (224a, 224b).

9. Dispositif selon l'une des revendications précédentes, dans lequel au moins le premier dispositif (210) destiné à générer une pluralité de séquences de canaux candidates différentes l'une de l'autre présente les caractéristiques suivantes :

un dispositif (12) destiné à ajouter une étiquette (44) à un mot d'information du premier canal d'information ;

un dispositif (16) destiné à traiter le mot d'information ensemble avec l'étiquette ajoutée par un algorithme de combinaison à couplage rétroactif pouvant être inversé, pour obtenir un mot d'information combiné, dans lequel les unités d'information sont combinées entre elles et/ou avec l'étiquette ajoutée, de sorte que le mot d'information combiné soit identifié de manière univoque par l'étiquette, et

un dispositif (18a) destiné à soumettre le mot d'information combiné à la première séquence de codes (212) associée au premier canal.

10. Dispositif selon la revendication 9, dans lequel avant le dispositif (18a) destiné à soumettre est connecté un codeur de redondance (17a) et/ou un dispositif d'entremêlement (17b).

11. Dispositif selon l'une des revendications 1 bis 8, dans lequel au moins le premier dispositif (210) destiné à générer une pluralité de séquences de canaux candidates présente les caractéristiques suivantes:

un dispositif (12') destiné à ajouter une étiquette de substitution à un mot d'information du premier canal d'information ;

un dispositif (16) destiné à traiter le mot d'information ensemble avec l'étiquette de substitution ajoutée par un algorithme de combinaison à couplage rétroactif pouvant être inversé, pour obtenir un mot d'information combiné, dans lequel les unités d'information sont combinées entre elles et/ou avec étiquette de substitution ajoutée (13');

un dispositif (19) destiné à coupler le mot d'information combiné ou un mot dérivé du mot d'information combiné à une séquence de couplage (VS) qui est déterminée, à l'aide du même algorithme de combinaison à couplage rétroactif, à partir d'une étiquette (22), pour obtenir un mot d'information couplé qui est identifié de manière univoque par l'étiquette ; et

un dispositif (18'a) destiné à soumettre le mot d'information couplé à la première séquence de codes (212).

**12.** Dispositif selon la revendication 11, dans lequel après le dispositif (16) destiné à traiter est connecté un codeur de redondance (17a) et/ou un dispositif (17b) d'entremêlement, pour former le mot dérivé du mot d'information combiné.

**13.** Dispositif selon l'une des revendications 9 à 12, dans lequel le dispositif {16} destiné à traiter par un algorithme de combinaison à couplage rétroactif pouvant être inversé comporte un registre à décalage aux caractéristiques suivantes :

une entrée (50) ; une sortie (52) ;
un branchement de couplage rétroactif avec une première et une deuxième extrémité (54, 56), qui est relié, par sa première extrémité (54), à la sortie (52) et qui présente au moins une première unité de temporisation (60a à 60d) ; et
un dispositif de couplage XOR (56) destiné à coupler XOR une unité d'information à l'entrée (50) à une valeur présente à la deuxième extrémité (56) du branchement de couplage rétroactif, le dispositif de couplage XOR (56) étant relié, du côté de la sortie, à la sortie (52).

**14.** Dispositif selon l'une des revendications précédentes, disposé de manière à être utilisé dans un émetteur d'un poste de base d'un système de communication mobile.

**15.** Procédé de génération d'une séquence d'émission présentant des informations d'une pluralité de canaux d'information, aux étapes suivantes consistant à :

générer (210) une pluralité de séquences de canaux candidates différentes l'une de l'autre à partir d'une information d'un premier canal d'information (204) de la pluralité de canaux d'information (204, 206, 208) à l'aide d'une première séquence de codes (212) associée au premier canal d'information (204), chaque séquence de canaux candidate portant la même information que l'information du premier canal d'information ;
générer (214) une séquence de canaux candidate pour un deuxième canal d'information (206) à partir de la pluralité de canaux d'information (204, 206, 208) à l'aide d'une deuxième séquence de codes (216) associée au deuxième canal d'information et qui diffère de la première séquence de codes (212) ;
déterminer (222, 228, 230) une séquence combinée comme séquence d'émission, en combinant les séquences de canaux candidates qui, combinées l'une avec l'autre, donnent la séquence d'émission remplissant un critère prédéterminé.

**16.** Procédé selon la revendication 15, dans lequel, à l'étape de détermination,

chaque séquence de canaux candidate pour le premier canal d'information est combinée avec la séquence de canaux candidate pour le deuxième canal d'information, pour obtenir une pluralité de séquences combinées (224a, 224b), et
parmi la pluralité de séquences combinées est sélectionnée, comme séquence d'émission, la séquence combinée qui remplit un critère prédéterminé.

**17.** Procédé selon la revendication 15, dans lequel, à l'étape de détermination,

est déterminée la séquence d'émission,
sont sélectionnées (230) les séquences d'émission candidates qui, combinées l'une avec l'autre, donnent la séquence d'émission, et
sont combinées les séquences d'émission candidates sélectionnées (222), pour obtenir la séquence d'émission déterminée.

**18.** Dispositif pour déterminer des informations d'un canal d'information à partir d'une séquence d'émission reçue (250) générée, à l'aide de différentes séquences de codes pour différents canaux d'information et à l'aide de différentes séquences de canaux candidates pour au moins un canal d'information, aux caractéristiques suivantes :

un dispositif (252) destiné à extraire de la séquence d'émission reçue (250) la séquence de canaux candidate correspondant à l'un canal d'information à l'aide d'un corrélateur dont les propriétés sont définies par une séquence de codes associée à l'un canal d'information ; et
un dispositif (254) destiné à traiter la séquence de canaux candidate, pour déterminer l'information pour l'un canal d'information, le dispositif destiné à traiter la séquence de canaux candidate étant disposée de sorte que le traitement de l'information soit inversé lors de la génération de cette séquence de canaux candidate.

**19.** Dispositif selon la revendication 18, dans lequel le dispositif (254) destiné à traiter présente les caractéristiques suivantes :

un dispositif (68) destiné à traiter la séquence d'émission reçue par un algorithme inverse à l'algorithme de combinaison à couplage rétroactif pouvant être inversé, pour obtenir une séquence contenant le mot d'information et l'étiquette ; et

un dispositif (70) destiné à extraire l'étiquette de la séquence, pour obtenir le mot d'information.

20. Dispositif selon la revendication 19, dans lequel le dispositif destiné à traiter (68) présente un registre à décalage couplé direct qui est exactement inverse à un registre à décalage à couplage rétroactif utilisé lors de la génération.

21. Procédé pour déterminer des informations d'un canal d'information à partir d'une séquence d'émission reçue (250) générée, à l'aide de différentes séquences de codes pour différents canaux d'information et à l'aide de différentes séquences de canaux candidates pour au moins un canal d'information, aux étapes suivantes consistant à :

extraire (252) de la séquence d'émission reçue (250) la séquence de canaux candidate correspondant à l'un canal d'information à l'aide d'un corrélateur dont les propriétés sont définies par une séquence de codes associée à l'un canal d'information ; et

traiter (254) la séquence de canaux candidate, pour déterminer l'information pour l'un canal d'information, le dispositif destiné à traiter la séquence de canaux candidate étant disposée de sorte que le traitement de l'information soit inversé lors de la génération de cette séquence de canaux candidate.

Fig. 1

Etiketten — 22

210

10

14

Inf.-
wort

24

12
Hinzufügen
der
Etiketten

16
rückgek.
Kombin.-
algorithmus

18a
Beaufschlagen

26

27a

27b

20

212

1. Codesequenz

**Fig. 2**

13`
Platzhalter-
Etikett

210`

10`

VS

19
Verknüpf.

Beaufs.

27a

18a`

14

Inf.-
wort

12`
Hinzufügen
des Platz-
halter-Etik.

16
rückgek.
Kombin.-
algorithmus

17
Codieren

Verschachteln

19    VS

Verknüpf.

18a`
Beaufs.

27b

13

19
Verknüpf.

18a`
Beaufs.

27c

VS

1. Codesequenz

212

**Fig. 3**

Fig. 4

Fig. 5

Fig. 6

66

68

254

70

inverser
rückgekopp.
Kombin.-Alg.

empf.
Sendesequ.

Extrahieren
des
Etiketts

Informationswort

72

Etikett

74

Fig. 7

68

94

96

90

U(D)

B(D)

88

D

92a

D

92b

D

92c

D

92d

Fig. 8

42  42          Informationseinheit          44  44  44  44

|←———————— Informationswort ————————→|← Etikett →|
                                              (Präfix)

40

## Fig. 9

102    108
        108a    108    108b      112  1. Code-
                               110 sequenz

1. Inf.-   ┌─ENC── JLV─┐   Beauf-   1. Kanal-
kanal      └───────────┘   schlagen  Sequenz

104    108
        108a    108    108b      114  2. Code-
                               110 sequenz

2. Inf.-   ┌─ENC── JLV─┐   Beauf-   2. Kanal-    Kombi-   Sendekanal      └───────────┘   schlagen  Sequenz    nieren   sequenz

106    108                                        120
        108a    108    108b      116  3. Code-
                               110 sequenz

3. Inf.-   ┌─ENC── JLV─┐   Beauf-   3. Kanal-
kanal      └───────────┘   schlagen  Sequenz

## Fig. 10  (Stand der Technik)